(19) Europäisches Patentamt / European Patent Office / Office européen des brevets

(11) EP 1 800 078 B1

(12) EUROPÄISCHE PATENTSCHRIFT

(45) Veröffentlichungstag und Bekanntmachung des Hinweises auf die Patenterteilung:
30.05.2018 Patentblatt 2018/22

(21) Anmeldenummer: 05797323.2

(22) Anmeldetag: 05.10.2005

(51) Int Cl.:
*F28D 1/053* (2006.01)

(86) Internationale Anmeldenummer:
PCT/EP2005/010718

(87) Internationale Veröffentlichungsnummer:
WO 2006/040053 (20.04.2006 Gazette 2006/16)

(54) **LUFTGEKÜHLTER ABGASWÄRMEÜBERTRAGER, INSBESONDERE ABGASKÜHLER FÜR KRAFTFAHRZEUGE**

AIR-COOLED EXHAUST GAS HEAT EXCHANGER, IN PARTICULAR EXHAUST GAS COOLER FOR MOTOR VEHICLES

ÉCHANGEUR DE CHALEUR DE GAZ D'ÉCHAPPEMENT REFROIDI PAR AIR, EN PARTICULIER REFROIDISSEUR DE GAZ D'ÉCHAPPEMENT POUR VÉHICULES AUTOMOBILES

(84) Benannte Vertragsstaaten:
AT BE BG CH CY CZ DE DK EE ES FI FR GB GR HU IE IS IT LI LT LU LV MC NL PL PT RO SE SI SK TR

(30) Priorität: 07.10.2004 DE 102004049108
19.05.2005 DE 102005023795

(43) Veröffentlichungstag der Anmeldung:
27.06.2007 Patentblatt 2007/26

(73) Patentinhaber: MAHLE Behr GmbH & Co. KG
70469 Stuttgart (DE)

(72) Erfinder:
• DIGELE, Jörg
71691 Freiberg (DE)
• GESKES, Peter
73760 Ostfildern (DE)
• IRMLER, Klaus
72072 Tübingen (DE)
• VON LÜTZAU, Frank
71364 Winnenden (DE)

(74) Vertreter: Grauel, Andreas et al
Grauel IP
Patentanwaltskanzlei
Wartbergstrasse 14
70191 Stuttgart (DE)

(56) Entgegenhaltungen:
EP-A- 0 677 715      EP-A- 0 916 837
EP-A- 1 031 708      EP-A- 1 136 667
WO-A-2004/020928     DE-A1- 3 508 240
DE-A1- 4 240 239     DE-A1- 10 140 988
DE-A1- 10 327 847    DE-A1- 19 958 595
DE-C1- 19 514 016    US-A- 5 987 885

• PATENT ABSTRACTS OF JAPAN Bd. 1998, Nr. 13, 30. November 1998 (1998-11-30) -& JP 10 220305 A (ISUZU MOTORS LTD), 18. August 1998 (1998-08-18)
• PATENT ABSTRACTS OF JAPAN Bd. 2003, Nr. 12, 5. Dezember 2003 (2003-12-05) -& JP 2004 028469 A (TOYO RADIATOR CO LTD), 29. Januar 2004 (2004-01-29)

**Beschreibung**

Die Erfindung betrifft einen luftgekühlten Abgaswärmeübertrager, insbesondere einen Abgaskühler für Kraftfahrzeuge, nach dem Oberbegriff des Patentanspruches 1 sowie eine Anordnung zur Abgasrückführung nach dem Oberbegriff des Patentanspruches 33.

Abgaskühler werden bei heutigen Fahrzeugen, insbesondere Nutzfahrzeugen, im Rahmen eines Abgasrückführsystems (AGR-System) zur Kühlung von zurückgeführten Abgasen eingesetzt. Die Abgasrückführung basiert auf gesetzlichen Bestimmungen zur Verringerung des Kraftstoffverbrauches der Brennkraftmaschine und zur Reduktion der Schadstoffe (insbesondere $NO_x$) in den Abgasen der Brennkraftmaschine. Die bisher in Kraftfahrzeuge eingebauten Abgaskühler werden durch ein flüssiges Kühlmittel gekühlt, welches dem Kühlkreislauf der Brennkraftmaschine entnommen wird. Diese bekannten flüssigkeitsgekühlten Abgaskühler arbeiten sehr effektiv, haben jedoch den Nachteil, dass die Abkühlung der Abgase an die Kühlmitteltemperatur gebunden ist, die im Bereich von 80 bis 100° C liegt. Damit lassen sich nur Abgasaustrittstemperaturen hinter dem Abgaskühler von ca. 120 bis 150° C erreichen.

Durch die DE 199 07 163 A1 der Anmelderin wurde ein Abgaswärmeübertrager in Edelstahlbauweise bekannt, welcher aus einem von Abgasen durchströmbaren Rohrbündel und einem von einem flüssigen Kühlmittel durchströmbaren Gehäuse besteht. Die Abgasrohre sind in Rohrböden eingeschweißt, die ihrerseits mit dem Gehäuse verschweißt sind. Alle Schweißnähte sind vorzugsweise durch Laserstrahlschweißen hergestellt.

Durch die DE 102 03 003 A1 der Anmelderin wurde ein Abgaswärmeübertrager mit einem integrierten Bypass und einer integrierten Bypassklappe bekannt, welche ein Umgehen des Abgaswärmeübertragers ermöglicht, wenn eine Kühlung der Abgase nicht erforderlich ist.

Durch die EP 0 677 715 A1 der Anmelderin wurden verschiedene Ausführungsformen für Abgaskühler für Kraftfahrzeuge bekannt, wobei eine Ausführungsform einen luftgekühlten Abgaskühler offenbart, welcher als Scheibenwärmeübertrager aufgebaut ist, zwischen denen Wellrippen zur Luftkühlung angeordnet sind. Die Scheiben, welche die Abgaskanäle bilden, bestehen jeweils aus zwei Scheibenhälften, welche umfangseitig miteinander verlötet sind und über aufeinander stapelbare Ein- und Austrittsöffnungen miteinander verbunden sind. In den Abgaskanälen bzw. Scheiben sind so genannte winglets angeordnet, d. h. V-förmig angeordnete Lappen oder Rippen, welche für eine Verwirbelung der Abgasströmung sorgen und eine Rußablagerung verhindern.

Durch die EP 916 837 B1 der Anmelderin wurde ein flüssigkeitsgekühlter Abgaskühler mit einem integrierten Abgasrückführ-(AGR-)Ventil bekannt, welches die Menge des zurückgeführten Abgases bestimmt - ein separates AGR-Ventil in der AGR-Leitung entfällt somit.

Die DE 103 27 847 A1 offenbart einen Abgasfluidkreislauf für einen Turbomotor mit Abgasrückführung mit einem Luftgekühlten Abgaswärmeübertrager gemäß dem Oberbegriff von Anspruch 1.

Ausgehend von diesem Stand der Technik, insbesondere einem luftgekühlten Abgaswärmeübertrager, ist es Aufgabe der vorliegenden Erfindung, einen Abgaswärmeübertrager der eingangs genannten Art hinsichtlich seiner Bauweise und der damit verbundenen Einbaumöglichkeiten im Kraftfahrzeug zu verbessern. Es ist auch Aufgabe der Erfindung, eine Anordnung zur Abgasrückführung dahingehend zu verbessern, dass eine stärkere Absenkung der Abgastemperatur möglich ist. Darüber hinaus soll ein Einfrieren von Kondensat im Abgaswärmeübertrager vermieden werden.

Diese Aufgabe wird durch die Merkmale des Patentanspruches 1 gelöst. Der Abgaswärmeübertrager weist einerseits einen Rippenrohrblock, d. h. einen aus Rohren für das Abgas und Rippen für die Luftkühlung aufgebauten Block und andererseits Sammelkästen auf, in welche die Abgasrohre münden. Vorzugsweise sind die Sammelkästen geschweißt oder gelötet und weisen Rohrböden auf, in welche die Rohrenden der Abgasrohre eingelötet oder eingeschweißt, vorzugsweise laserstrahlgeschweißt sind. Als bevorzugter Werkstoff für die Abgasrohre und die Sammelkästen wird Edelstahl verwendet. Für die Berippung auf der Außenseite der Abgasrohre können Wellrippen aus Edelstahl oder auch aus einem Buntmetall Verwendung finden. Zur Erhöhung des Wärmeüberganges auf der Luftseite weisen die Rippen, insbesondere Wellrippen Kiemen auf, welche mittels bekannter Fertigungsverfahren in das Rippenmaterial eingeschnitten werden. Statt Wellrippen können auch so genannte Stegrippen eingesetzt werden, wie sie insbesondere bei luftgekühlten Ladeluftkühlern bekannt sind. Bekiemte Wellrippen sind dagegen insbesondere von Kühlmittelkühlern her bekannt. Mit dieser luftgekühlten Bauweise des erfindungsgemäßen Abgaskühlers wird der Vorteil erreicht, dass eine Abkühlung des rückgeführten Abgases auf niedrigere Temperaturen als durch eine Kühlmittelkühlung (Flüssigkeitskühlung) möglich ist, was die Leistung des Verbrennungsmotors steigert. Darüber hinaus erlaubt die erfindungsgemäße Bauweise, den Abgaskühler zusammen mit weiteren luftgekühlten Wärmeübertragern zu einer Baueinheit, einem so genannten Kühlmodul, bestehend aus Kühlmittelkühler, Ladeluftkühler und/oder Kondensator, zusammenzufassen. Vorteilhafterweise kann der erfindungsgemäße Abgaskühler vor dem Kühlmittelkühler oder Kondensator angeordnet werden, wobei er nur einen Teil der Stirnfläche einnimmt. Der verbleibende Teil der Stirnfläche kann durch einen Ladeluftkühler abgedeckt werden. Daraus ergibt sich eine äußerst kompakte Bauweise für ein Kühlmodul.

Nach einer weiteren vorteilhaften Ausgestaltung der Erfindung sind die Sammelkästen des Abgaswärmeübertragers aus Kunststoff herstellbar, wobei die Kunststoffkästen mit einem metallischen Rohrboden mechanisch verbunden wird, z. B. mittels einer Bördelverbindung und einer eingelegten Dichtung. Die Verwendung von Kunststoff hat den Vorteil einer geringeren Korrosionsanfälligkeit gegenüber dem Abgas. Der Kunststoffwerkstoff ist so gewählt, dass er auch der mechanischen Beanspruchung infolge Druck und Temperatur des Abgases standhält. Der metallische Wärmeübertragerblock, bestehend aus Rohren, Rippen und Rohrboden wird separat durch Lötung oder auch Schweißung hergestellt. Danach werden die Kunststoffkästen aufgesetzt.

Weitere vorteilhafte Ausgestaltungen ergeben sich aus weiteren Unteransprüchen, welche Bemessungsangaben bzw. Bemessungsbereiche für die Dimensionierung der Rippenhöhe, der Rohrhöhe, des Verhältnisses von Rohrhöhe zu Rippenhöhe, der Rippendichte sowie des hydraulischen Durchmessers der Rohre enthalten. Im Rahmen dieser Bemessungsangaben ergibt sich ein auf die Medien Abgas und Luft optimierter Wärmeübertrager.

In einer nicht erfindungsgemäßen Ausgestaltung weist der Abgaskühler einen Bypasskanal auf, der über eine Bypassklappe gesteuert wird. Damit wird der Vorteil erreicht, dass ein Einfrieren des Kühlers mit Kondensat bei niedrigen Außentemperaturen vermieden wird; darüber hinaus wird auch ein schnelleres Aufheizen des Motors erreicht.

In erfindungsgemäßer Ausgestaltung der Erfindung ist dem Abgaswärmeübertrager ein Bypasskanal - ohne Bypassklappe - zugeordnet, wobei die Durchströmung des Bypasskanals über den unterschiedlichen Druckabfall im Bypasskanal und im Abgaswärmeübertrager gesteuert wird. Der Bypasskanal ist derart gestaltet, dass sein Druckabfall bei über dem Gefrierpunkt liegenden Außentemperaturen geringer als der des Abgaswärmeübertragers ist, was beispielsweise durch eine Blende im Eingangsbereich des Bypasskanals erreicht werden kann. Bei eingefrorenen Abgaskanälen wird der Druckabfall im Abgaswärmeübertrager größer als der des Bypasskanals, so dass dieser von Abgas durchströmt wird. Damit wird der Vorteil erreicht, dass bei eingefrorenem Abgaskühler Abgas rückgeführt werden kann. Eine Bypassklappe mit den ihr anhaftenden Problemen entfällt.

In einer nicht erfindungsgemäßen Ausgestaltung ist dem Abgaswärmeübertrager ein Bypass zugeordnet, welcher über ein differenzdruckgesteuertes Ventil geöffnet oder geschlossen wird. Steigt der Druckabfall im Abgaswärmeübertrager infolge Einfrierens von Kondensat in den Abgaskanälen, steigt auch der Differenzdruck, welcher das Ventilschließglied öffnet und somit den Bypass zwischen Abgaszuführ- und -rückführleitung freigibt. Auch damit wird der Vorteil erreicht, dass der Abgaskühler im Falle des Einfrierens umgangen und eine Abgasrückführung aufrechterhalten werden kann. Möglich ist auch, dass das Ventilschließglied extern angesteuert wird.

In weiterer vorteilhafter Ausgestaltung der Erfindung sind zur Beheizung des Abgaswärmeübertragers, insbesondere seiner Abgaskanäle Kühlmittelkanäle, insbesondere Bypasskanäle vorgesehen, welche Wärme an die durch Einfrieren von Kondensat gefährdeten Abgaskanäle heranbringen. Damit wird der Vorteil erreicht, dass ein Einfrieren von Kondensat im Abgaswärmeübertrager verhindert wird.

In weiterer vorteilhafter Ausgestaltung der Erfindung ist dem Abgaswärmeübertrager eine elektrische Heizung zugeordnet, welche die Abgaskanäle beheizt und damit ebenfalls ein Einfrieren verhindert.

In einer vorteilhaften Weiterbildung der Erfindung ist vor dem Rippenrohrblock des Abgaskühlers eine Jalousie, insbesondere eine Klappenjalousie angeordnet. Damit wird ebenfalls der Vorteil erreicht, dass ein Einfrieren des Abgaskühlers mit Kondensat bei sehr tiefen Temperaturen vermieden und ein schnelleres Aufheizen des Motors gewährleistet ist.

In weiterer vorteilhafter Ausgestaltung der Erfindung ist in Luftströmungsrichtung vor dem Abgaswärmeübertrager eine verschiebbare Abdeckvorrichtung angeordnet, welche die zwischen den Abgaskanälen angeordneten Kühlluftkanäle abdecken und damit eine Kühlung unterbinden kann. Damit wird der Vorteil erreicht, dass ein Einfrieren von Kondensat in den Abgaskanälen verhindert und die Abgasrückführung aufrechterhalten wird. Die Abdeckvorrichtung kann vorzugsweise über einen Thermostaten, z. B. ein Dehnstoffelement betätigt werden.

In weiterer vorteilhafter Ausgestaltung der Erfindung sind der Abgaskühler und der Ladeluftkühler zu einem Modul miteinander verbunden, wobei das austretende Abgas in einem separaten Abgaskanal durch den Austrittskasten des Ladeluftkühlers geleitet wird. Dadurch kann Bauraum eingespart werden. Die Trennung von Abgas und Ladeluft im Austrittskasten des Ladeluftkühlers ist erforderlich, um Korrosionen des Abgaskondensats mit dem normalerweise aus Aluminium bestehende Ladeluftkühler zu vermeiden. Der Kanal kann dadurch geschaffen werden, dass eine dicke Aluminiumwand (Tennwand) in den Austrittskastens des Ladeluftkühlers eingebracht wird, die aufgrund ihrer Dicke lange Zeit dem Korrosionsangriff von saurem Abgaskondensat standhält. Alternativ ist auch denkbar, einen Kunststoff- oder einen Edelstahl-Kanal in den Austrittskastens des Ladeluftkühlers einzubringen, durch den das Abgas strömt. Dieser Kanal kann auch außen (als zusätzliches Teil) an den Austrittskasten des Ladeluftkühlers oder in einer Ausbuchtung des Austrittskastens angebracht werden. Vorteilhaft ist, wenn die Ladeluft und das Abgas erst soweit stromabwärts vom Ladeluftkühler gemischt werden, dass kein Kondensat in den Ladeluftkühler zurückfließen kann. Die Mischstelle aus Ladeluft und Abgas kann auch in Form einer Venturidüse oder einer ähnlichen Einrichtung ausgeführt werden, so dass das Abgas teilweise aus dem Abgaskühler gesaugt wird. Dadurch ließe sich der Abgasmassenstrom weiter erhöhen.

In einer weiteren vorteilhaften Ausgestaltung der Erfindung sind der Abgaskühler und ein Ladeluftkühler zu einem gemeinsamen Kühler integriert, d. h. mit gemeinsamen Sammelkästen und mit einem gemeinsamen Rippenrohrblock, dessen Rohre sowohl von Abgas als auch von Ladeluft bzw. von einem Gemisch aus Abgasen und Ladeluft durchströmt werden. Die Zufuhr von Abgas und Ladeluft kann entweder über einen gemeinsamen Eintrittsstutzen, was den Vorteil einer Mischung beider Gasströme mit sich bringt, oder über separate Eintrittsstutzen erfolgen. Durch diesen gemeinsamen Wärmeübertrager ergeben sich Kosten- und Gewichtsvorteile gegenüber zwei separaten Wärmeübertragern. Darüber hinaus ergibt sich der Vorteil, dass der aufgrund der heißen und korrosiven Abgase vorzugsweise in Edelstahl ausgeführte Kühler auch höheren Ladeluftdrücken standhält. Die derzeitige Motorenentwicklung geht in diese Richtung, d. h. tendiert zu höherer Aufladung, welche mit den derzeitigen Ladeluftkühlern in Aluminiumbauweise nicht immer beherrschbar ist.

Nach einer weiteren vorteilhaften Ausgestaltung der Erfindung ist dem Abgaswärmeübertrager ein Oxidationskatalysator vorgeschaltet. Dies hat den Vorteil, dass Rußablagerungen in den Abgas führenden Rohren reduziert werden. Vorteilhafterweise kann der Oxidationskatalysator auch in einem eintrittsseitigen Sammelkasten angeordnet werden.

Die Aufgabe der Erfindung wird auch durch eine Anordnung für ein AGR-System gelöst, bei welchem dem erfindungsgemäßen luftgekühlten Abgaskühler ein herkömmlicher flüssigkeitsgekühlter Abgaskühler vorgeschaltet ist. Damit wird eine zweistufige Abkühlung des Abgases bei der Abgasrückführung erreicht, so dass die Eintrittstemperaturen für den luftgekühlten Abgaskühler gesenkt werden können. Damit ergibt sich auch eine Angleichung der Abgas- und der Ladelufttemperaturen, was insbesondere bei Verwendung eines gemeinsamen Wärmeübertragers für Abgas und Ladeluft vorteilhaft ist. Durch die zweistufige Abgaskühlung erreicht das Abgas bei seiner Rückführung in den Ansaugtrakt der Verbrennungskraftmaschine eine niedrigere Temperatur, was den Füllungsgrad der Zylinder und damit die Leistung des Motors steigert.

Ausführungsbeispiele der Erfindung sind in der Zeichnung dargestellt und werden im Folgenden näher beschrieben. Es zeigen

Fig. 1     einen luftgekühlten Abgaskühler in Explosivdarstellung,

Fig. 2     den Abgaskühler in einer Ansicht,

Fig. 3     eine Weiterbildung des Abgaskühlers mit Bypasskanal,

Fig. 4     ein AGR-System mit zweistufiger Abgaskühlung durch flüssigkeitsund luftgekühlten Abgaskühler,

Fig. 5     ein Wärmeübertragermodul, bestehend aus Abgas- und Ladeluftkühler, mit einer ersten Ausführung eines separaten Abgaskanals,

Fig. 6a    eine zweite Ausführungsform des separaten Abgaskanals im Austrittskastens des Ladeluftkühlers,

Fig. 6b    eine dritte Ausführungsform eines separaten Abgaskanals auf der Außenseite des Austrittskastens des Ladeluftkühlers,

Fig. 7a    eine erste Ausführungsform eines kombinierten Abgas- und Ladeluftkühlers,

Fig. 7b    eine zweite Ausführungsform des kombinierten Abgas- und Ladeluftkühlers,

Fig. 8a    einen Abgaskühler mit geschlossener Jalousie,

Fig. 8b    einen Abgaskühler mit offener Jalousie,

Fig. 9a    einen Abgaskühler mit einer verschiebbaren, geschlossenen Abdeckvorrichtung,

Fig. 9b    einen Abgaskühler mit der verschiebbaren, offenen Abdeckvorrichtung,

Fig. 10    einen Abgaskühler mit einem Kühlmittelbypasskanal,

Fig. 11    einen Abgaskühler mit einer elektrischen Heizung und

Fig. 12    einen Abgaskühler mit Bypassventil.

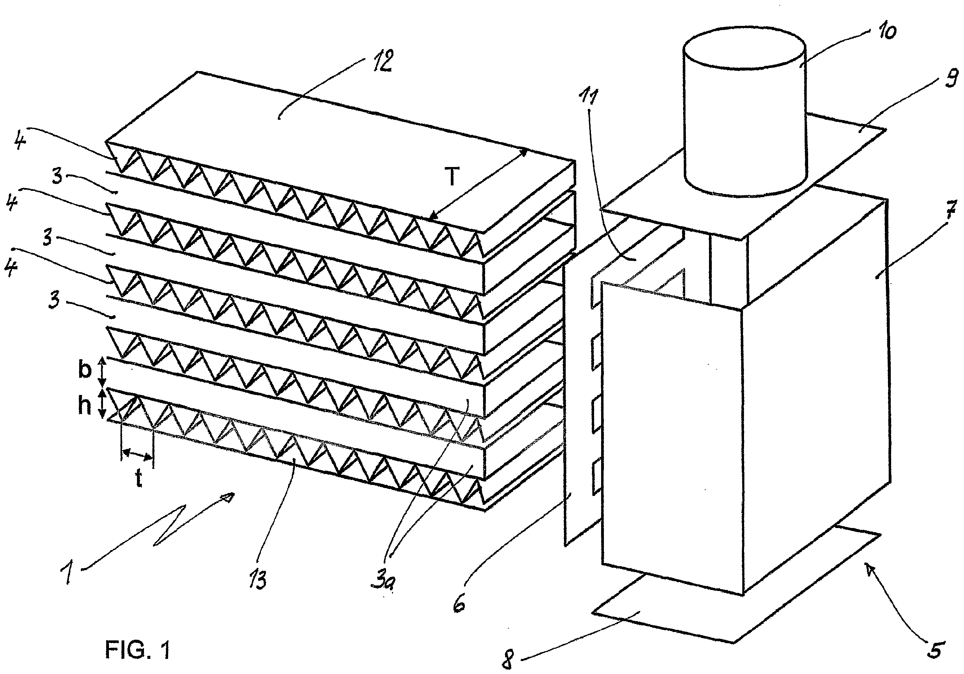

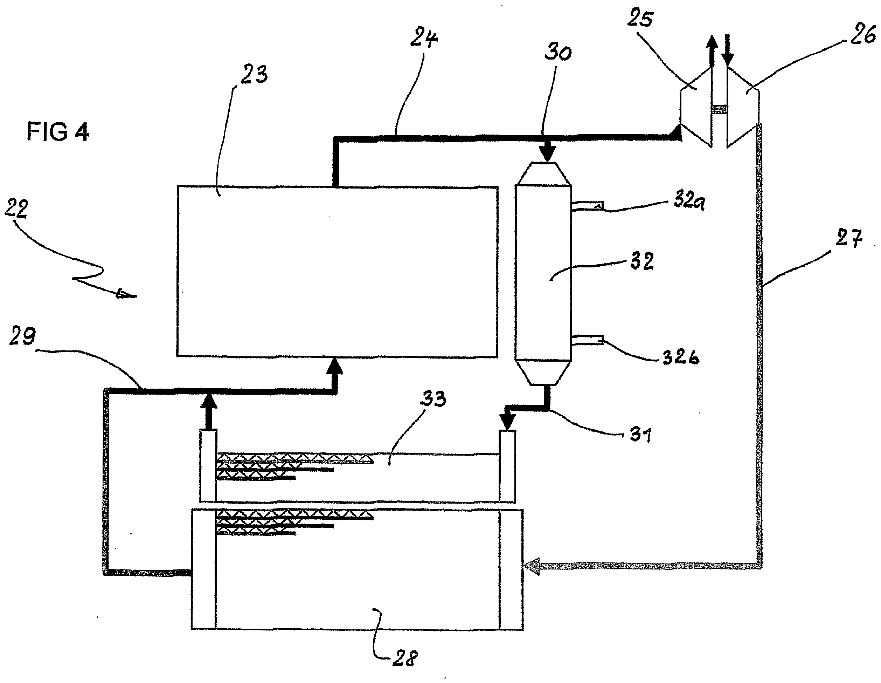

Fig. 1 zeigt einen Abgaskühler 1 in Explosivdarstellung, d. h. in Einzelteile bzw. Baugruppen zerlegt. Der Abgaskühler 1 dient der Kühlung von Abgasen für eine Abgasrückführung bei Brennkraftmaschinen von Kraftfahrzeugen, was später anhand von Fig. 4 genauer erläutert wird. Der Abgaskühler 1 weist einen Rippenrohrblock 2 auf, welcher aus Flachrohren 3 und zwischen diesen angeordneten Wellrippen 4 besteht. Die Wellrippen 4 werden mit den Flachrohren verlötet oder auch verschweißt und bilden somit einen kompakten Block 2. Die Wellrippen 4 werden von Umgebungsluft durchströmt und weisen zur Erhöhung des Wärmeüberganges gegenüber der Luft nicht dargestellte Kiemen auf, wie sie beispielsweise bei Kühlmittelkühlern für Wellrippen bekannt sind. Alternativ zu den Wellrippen 4 können auch nicht dargestellte so genannte Stegrippen, d. h. mäanderförmig ausgebildete Rippen mit versetzt angeordneten Flanken eingesetzt werden. Die Stegrippen haben in der Regel eine geringere Wärmeübertragungsleistung. Die Rohre 3 werden von Abgas durchströmt und weisen nicht dargestellte winglets auf, wie sie aus dem eingangs genannten Stand der Technik bekannt sind. Beispielsweise können diese winglets in die flachen Seiten der Flachrohre 4 eingeformt sein, z. B. durch Massivumformung. Damit wird ein verbesserter Wärmeübergang erreicht, und Rußablagerungen werden vermieden. Alternativ können in den Rohren auch nicht dargestellte Innenrippen angeordnet und eingelötet sein. Der Abgaskühler 1 weist ferner mindestens einen Sammelkasten 5 auf, welcher aus einem Boden 6, einem Deckel 7, einer Stirnwand 8 und einer weiteren Stirnwand 9 mit Stutzen 10 stoffschlüssig zusammengesetzt ist. Die genannten Teile bestehen vorzugsweise aus Edelstahl - ebenso wie die Abgasrohre 3 und die Wellrippen 4. In dem Boden 6 sind rechteckförmige Öffnungen 11 vorgesehen, die dem Querschnitt der Flachrohre 3 entsprechen. Die Rohrenden 3a werden in die Öffnungen 11 des Rohrbodens 11 eingesetzt und mit dem Rohrboden 6 verschweißt, vorzugsweise durch Laserstrahlschweißen. Damit ergibt sich eine dichte und feste Rohrbodenverbindung. Ein weiterer nicht dargestellter Sammelkasten ist auf der anderen Seite des Rippenrohrblockes 2 vorgesehen, so dass alle Abgasrohre 3 parallel und in derselben Richtung durchströmt werden. Umgebungsluft und Abgasstrom bilden somit einen Kreuzstrom. Der Rippenrohrblock 2 wird oben und unten durch Seitenteile 12, 13 abgeschlossen, welche mit den äußersten Rippenlagen verlötet sind. Die Tiefe des Rippenrohrblockes 2 in Luftströmungsrichtung ist mit T angegeben. Die Höhe der Wellrippen 4 ist mit h, die Höhe der Flachrohre 3 ist mit b und die Teilung der Wellrippen mit t bezeichnet. Die Teilung t ist der reziproke Wert der Rippendichte: je größer die Teilung t, desto geringer ist die Rippendichte, welche als Anzahl der Rippen pro dm definiert ist. In dem dargestellten Ausführungsbeispiel ist der Rippenrohrblock 2 einreihig ausgebildet; es kann jedoch auch vorteilhaft sein, den Rippenrohrblock zwei- oder mehrreihig auszubilden, d. h. mit in Luftströmungsrichtung (in Tiefenrichtung T) kürzeren Rohren. Dadurch ergibt sich eine höhere Innendruckfestigkeit für die Abgasrohre. Nach einem bevorzugten Ausführungsbeispiel der Erfindung sind für die optimale Dimensionierung des Abgaskühlers 1 bzw. des Rippenrohrblockes 2 folgende Bemessungsbereiche vorgesehen: die Rippenhöhe h liegt in einem Bereich von 2 bis 10 mm, vorzugsweise in einem Bereich von 4 bis 6 mm, insbesondere bei 5 mm. Die Rohrhöhe b liegt im Bereich von 2 bis mm, vorzugsweise im Bereich von 3 bis 10 mm, insbesondere bei 4,5 mm. Das Verhältnis aus Rohrhöhe b zu Rippenhöhe h liegt im Bereich von 0,5 bis 1,5. Die Rippendichte liegt im Bereich von 20 bis 80 Rippen/dm, vorzugsweise im Bereich von 30 bis 50 Rippen/dm, insbesondere bei 35 Rippen/dm. Die Rohre weisen einen hydraulischen Durchmesser auf, der definitionsgemäß das Vierfache des Verhältnisses von Strömungsquerschnitt zu benetztem Umfang beträgt. Der hydraulische Durchmesser der Rohre liegt im Bereich von 2 bis 20 mm, vorzugsweise im Bereich von 3 bis 10 mm. Die Tiefe T des Rippenrohrblockes 2 liegt im Bereich von 20 bis 100 mm, vorzugsweise im Bereich von 30 bis 70 mm.

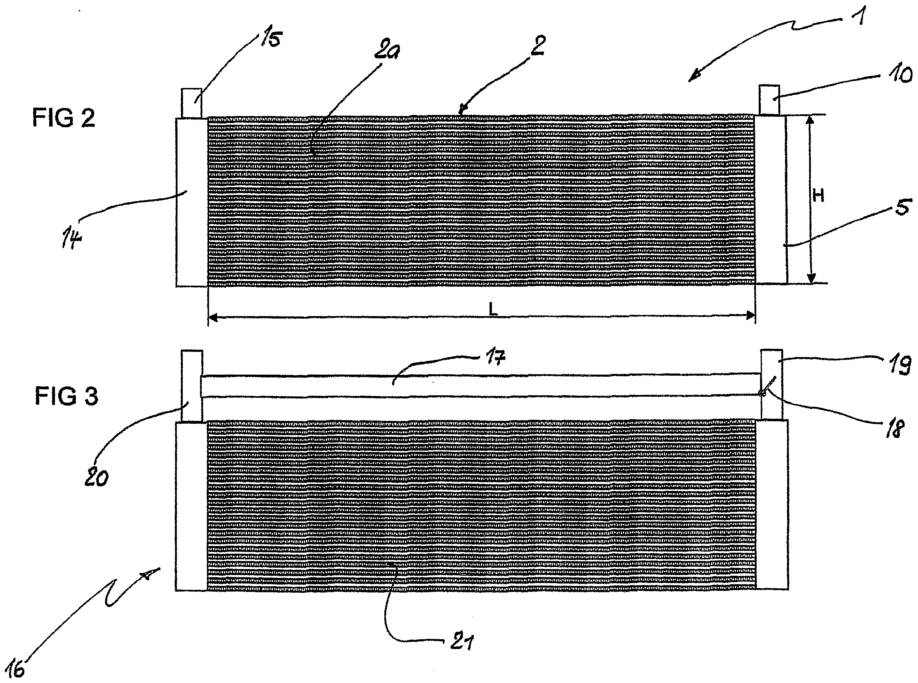

Fig. 2 zeigt den Abgaskühler 1 in einer Ansicht, wobei für gleiche Teile gleiche Bezugszahlen verwendet werden. Der Rippenrohrblock 2 ist in einer Ansicht dargestellt, d. h. mit seiner Stirnfläche 2a, welche eine Länge L und eine Höhe H aufweist. Beiderseits des Rippenrohrblockes 2 sind Sammelkästen 5, 14 angeordnet, jeweils mit dem Abgasstutzen 10 und einem Abgasstutzen 15, welche jeweils als Ein- oder Austrittsstutzen für das Abgas fungieren. Die Rohre des Rippenrohrblockes 2 werden somit - in der Zeichnung waagerecht - und parallel zueinander durchströmt. Selbstverständlich ist auch eine andere als die dargestellte Durchströmung möglich, z. B. eine U-förmige Umlenkung in einem Sammelkasten.

Nach einem bevorzugten Ausführungsbeispiel der Erfindung liegt das Verhältnis von Höhe H zu Länge L in einem Bereich von 0,1 bis 0,8, vorzugsweise im Bereich von 0,2 bis 0,4. Der Kühler ist somit relativ lang gestreckt und kann daher hinsichtlich seiner Längenerstreckung an die Länge eines Kühlmoduls bzw. eines Kühlmittelkühlers angepasst werden. Vorteilhafterweise wird dabei oberhalb des Abgaskühlers ein Ladeluftkühler angeordnet, welcher den verbleibenden Teil der Stirnfläche zumindest teilweise überdeckt.

In der Zeichnung nicht dargestellt ist ein auf der Abgasaustrittsseite des Abgaskühlers angeordneter Kondensatablass, wobei das Kondensat entweder direkt nach außen oder in die Abgasleitung (Auspuff) abgeführt wird.

Ebenfalls in der Zeichnung nicht dargestellt ist ein Abgasrückführventil, so genanntes AGR-Ventil, welches entweder im Eintrittsbereich oder im Austrittsbereich, also im Bereich der Abgasstutzen 10, 15 angeordnet werden kann. Das AGR-Ventil regelt die abgezweigte, rückgeführte Abgasmenge. Die Anordnung des AGR-Ventils im Abgasaustrittsbereich hat den Vorteil, dass dort niedrigere Abgastemperaturen herrschen als am Eintritt - insofern könnte das AGR-Ventil auch aus Kunststoff hergestellt werden.

Fig. 3 zeigt ein abgewandeltes Ausführungsbeispiel, nämlich einen Abgaskühler 16 mit einem Bypasskanal 17 und einer Bypassklappe 18, wobei sich der Bypasskanal 17 zwischen einem Eintrittsstutzen 19 und einem Austrittsstutzen 20 parallel zum Rippenrohrblock 21 erstreckt. Mittels der Bypassklappe 18 kann der gesamte Abgasstrom durch den Bypasskanal 17 gelenkt werden, so dass eine Abkühlung der Abgase nicht stattfindet. Dies kann beispielsweise bei kalter Brennkraftmaschine während der Warmlaufphase vorteilhaft sein.

Fig. 4 zeigt eine Anordnung von Komponenten eines Abgasrückführsystems, eines so genannten AGR-Systems 22 für Kraftfahrzeuge. Eine Brennkraftmaschine, ein Dieselmotor 23, weist eine Abgasleitung 24 auf, welche zu einer Abgasturbine 25 führt, welche einen Kompressor 26 antreibt. Vom Turboverdichter 26 führt eine Ladeluftleitung 27 zu einem Ladeluftkühler 28 und anschließend über eine Ansaugleitung 29 zum Motor 23. Der Ladeluftkühler 28 ist luftgekühlt und kühlt die im Verdichter 26 erhitzte, auf Ladedruck komprimierte Luft auf ein niedrigeres Temperaturniveau ab, um den Füllungsgrad für die Zylinder des Motors zu erhöhen. In der Abgasleitung 24, d. h. zwischen Motor 23 und Turbine 25 ist eine Abzweigstelle 30 vorgesehen, von der aus eine Abgasrückführleitung 31 abzweigt und dem Ansaugbereich des Motors 23 zugeführt wird. In der AGR-Leitung 31 ist ein erster Abgaskühler 32 angeordnet, welcher flüssigkeitsgekühlt ist und über Anschlüsse 32a, 32b an einen nicht dargestellten Kühlmittelkreislauf des Motors 23 angeschlossen ist. In Abgasströmungsrichtung hinter dem ersten Abgaskühler 32 ist ein zweiter Abgaskühler 33 angeordnet, welcher als erfindungsgemäßer luftgekühlter Abgaskühler ausgebildet ist. Die im zweiten Abgaskühler 32 abgekühlten Abgase werden der Ansaugleitung 29 zugeführt, d. h. mit der abgekühlten Ladeluft vermischt. Die durch die AGR-Leitung 31 rückgeführten Abgase werden somit zweistufig abgekühlt, wobei in der ersten Stufe durch den Abgaskühler 32 eine Abkühlung bis auf etwa 120 bis 150° C erreicht wird. In der zweiten Stufe durch den zweiten Abgaskühler 33 wird eine weitere Abkühlung der Abgase bis auf eine Temperatur erreicht, die 5 bis 50° C über der Umgebungstemperatur liegt.

In der Zeichnung sind der luftgekühlte Abgaskühler 33 und der Ladeluftkühler 28 übereinander angeordnet. Dies entspricht in etwa auch der tatsächlichen Anordnung im Motorraum, wo beide Kühler 28, 33 in Luftströmungsrichtung vor einem nicht dargestellten Kühlmodul, bestehend aus Kühlmittelkühler und Kondensator angeordnet sind. Sämtliche Wärmeübertrager, d. h. Kühlmittelkühler, Kondenstor, Ladeluftkühler und der erfindungsgemäße luftgekühlte Abgaskühler können somit kompakt zu einer Baueinheit, dem so genannten Kühlmodul zusammengefasst, im vorderen Motorraum des Kraftfahrzeuges angeordnet und befestigt werden. Dabei ist eine hinreichende Beaufschlagung mit Umgebungsluft sichergestellt.

Allerdings ist es auch möglich, den erfindungsgemäßen luftgekühlten Abgaskühler an anderer Stelle als am Kühlmodul im Motorraum anzuordnen und ihm gegebenenfalls einen eigenen Lüfter zuzuordnen.

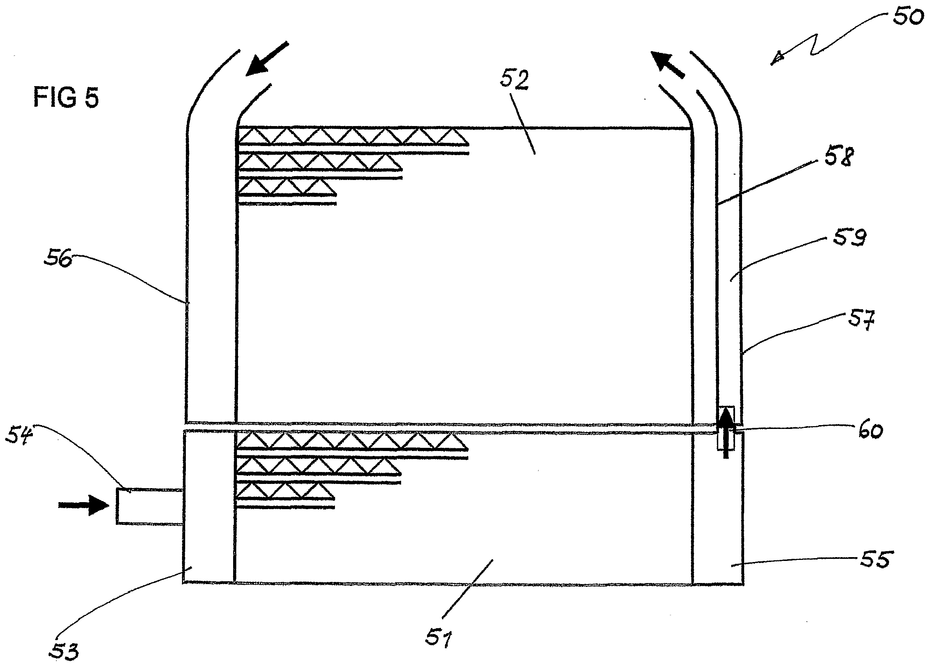

Fig. 5 zeigt ein Wärmeübertragermodul 50, welches aus einem - in der Zeichnung - unten angeordneten Abgaskühler 51 und einem darüber angeordneten Ladeluftkühler zusammengesetzt ist, wobei beide Wärmeübertrager 51, 52 parallel von Umgebungsluft beaufschlagt werden. Der Abgaskühler 51 weist einen eintrittsseitigen Kasten 53 mit einem Abgaseintrittsstutzen 54 sowie einen austrittsseitigen Kasten 55 auf. Die beiden Abgaskästen 53, 55 sind aus Korrosionsgründen vorzugsweise aus Kunststoff hergestellt, d. h. sie bestehen aus einem Kunststoffkasten, der durch eine nicht dargestellte mechanische Verbindung mit einem nicht näher dargestellten metallischen Rohrboden verbunden ist. Der Ladeluftkühler 52 weist einen eintrittsseitigen Luftkasten 56 und einen austrittsseitigen Luftkasten 57 auf. Die Luftkästen 56, 57 bestehen vorzugsweise aus einem Aluminiumwerkstoff, der mit den nicht dargestellten Rohrböden verschweißbar ist. In dem austrittsseitigen Luftkasten 57 ist eine Trennwand 58 angeordnet, welche einen separaten Kanal 59 bildet. Der austrittsseitige Abgaskasten 55 ist über einen Stutzen 60 mit dem Abgaskanal 59 verbunden, so dass eine Strömungsverbindung zwischen Abgaskasten 55 und Kanal 59 hergestellt ist. Das Abgas strömt somit aus dem Austrittskasten 55 in den separaten Kanal 59 durch den austrittsseitigen Luftkasten 57, wobei eine Trennung von Abgas und Ladeluft sichergestellt ist. Abgas und Ladeluft werden in einer nicht dargestellten Mischzone, die in einem hinreichenden Abstand stromabwärts vom Austrittskasten 57 angeordnet ist, miteinander gemischt. Dadurch wird eine Rückströmung von Abgaskondensat in den Ladeluftkühler 52 vermieden. Der Stutzen 60 kann durch geeignete Dichtungen gegenüber dem Luftkasten 57 abgedichtet werden. Abgaskühler 51 und Ladeluftkühler 52 können über nicht dargestellte Flansche oder Halterungen miteinander verschraubt werden.

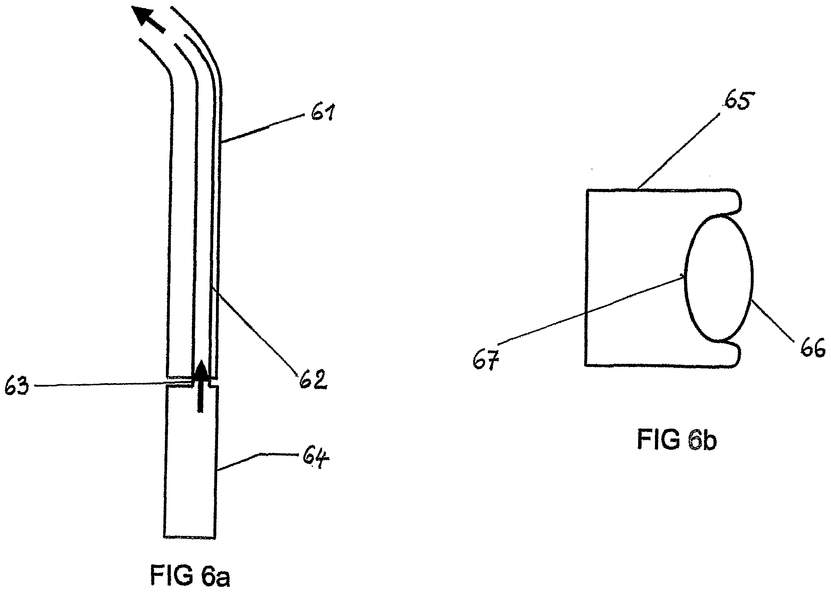

Fig. 6a zeigt ein weiteres Ausführungsbeispiel für die Ausbildung eines Abgaskanals für ein Wärmeübertragermodul, wie es in Fig. 5 dargestellt ist. Im Austrittskasten 61 des nicht dargestellten Ladeluftkühlers ist ein separater Abgaskanal 62 angeordnet, welcher aus einem korrosionsbeständigen Werkstoff, insbesondere Kunststoff oder Edelstahl herstellbar ist. Der Abgaskanal 62 ist über einen Verbindungsstutzen 63 mit dem Austrittskasten 64 des nicht dargestellten Abgaskühlers verbunden. Somit wird auch bei dieser Lösung eine Trennung des durch den Austrittskasten 61 des Ladeluftkühlers strömenden Abgases von der Ladeluft erreicht.

Fig. 6b zeigt ein weiteres Ausführungsbeispiel für die Anordnung und Ausbildung eines Abgaskanals, wobei hier lediglich die Querschnitte des Austrittskastens 65 des Ladeluftkühlers und des Abgaskanals 66 dargestellt sind. Der Austrittskasten 65 weist an seiner äußeren Längsseite eine Mulde 67 auf, welche dem ovalen Querschnitt 66 des Abgaskanals angepasst ist, so dass dieser in die Mulde 67 eingebettet ist. Der als Zusatzteil am Austrittskasten 65 befestigte Abgaskanal 66 kann aus Edelstahl, Aluminium oder Kunststoff hergestellt sein.

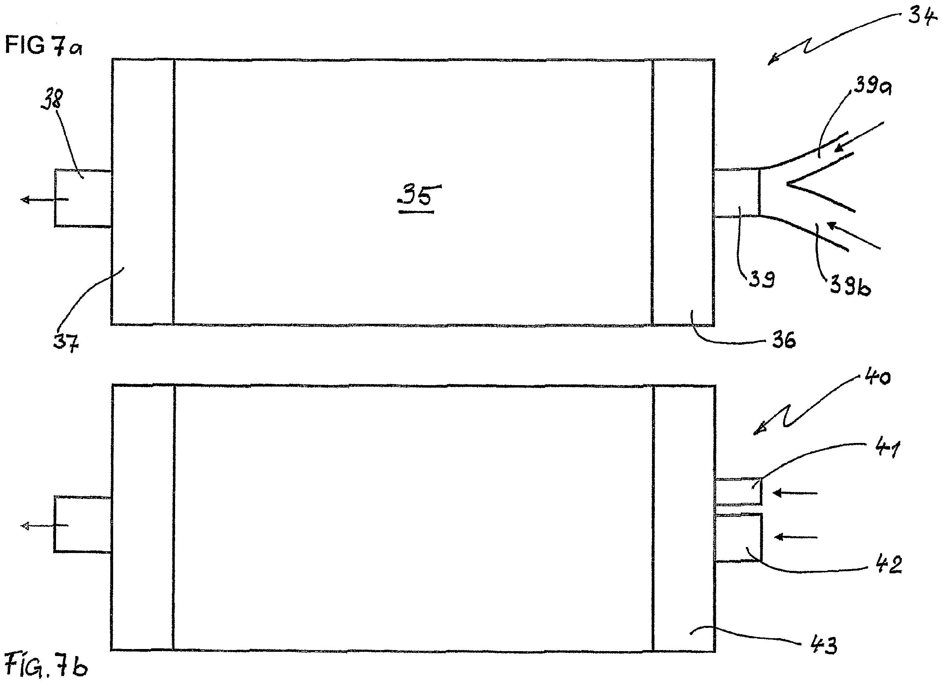

Fig. 7a zeigt als weiteres Ausführungsbeispiel einen kombinierten Wärmeübertrager 34, der eine Integration des luftgekühlten Abgaskühlers und des luftgekühlten Ladeluftkühlers (vgl. Fig. 3: Kühler 28, 33) darstellt. Der so genannte Kombi-Kühler 34 weist einen Rippenrohrblock 35, einen Eintrittskasten 36 und einen Austrittskasten 37 mit Austrittsstutzen 38 auf. Der Eintrittskasten 36 weist einen Eintrittsstutzen 39 mit einer Zuführleitung 39a für das Abgas und einer Zuführleitung 39b für die Ladeluft auf. Der Abgasstrom und der Ladeluftstrom werden somit im Stutzen 39 zusammengeführt, vorgemischt und in den Eintrittskasten 36 geführt, wo der Gesamtstrom auf die nicht dargestellten Rohre des Rippenrohrblockes 35 verteilt wird. Der Kombi-Kühler 34 wird in analoger Weise, wie in Fig. 4 dargestellt, in das AGR-System eingebaut, d. h. anstelle der dort gezeigten Kühler 33, 28. Vom gemeinsamen Austrittsstutzen 38 wird der abgekühlte Gasstrom dem Ansaugtrakt des Motors zugeführt.

Fig. 7b zeigt einen abgewandelten Kombi-Kühler 40 mit einem separaten Eintrittsstutzen 41 für das Abgas und einem separaten Eintrittsstutzen 42 für die Ladeluft. Beide Stutzen führen in einen gemeinsamen Sammelkasten 43. Rohrrippenblock und Austrittskasten entsprechen dem Ausführungsbeispiel gemäß Fig. 7a. Im ersten Ausführungsbeispiel werden Abgas- und Ladeluftstrom im Eintrittsstutzen 39 bereits vorgemischt, was auch eine Temperaturangleichung beider Gasströme bewirkt. Im zweiten Ausführungsbeispiel mit separaten Eintrittstutzen 41, 42 erfolgt die Mischung beider Gasströme im Wesentlichen im Eintrittskasten 43.

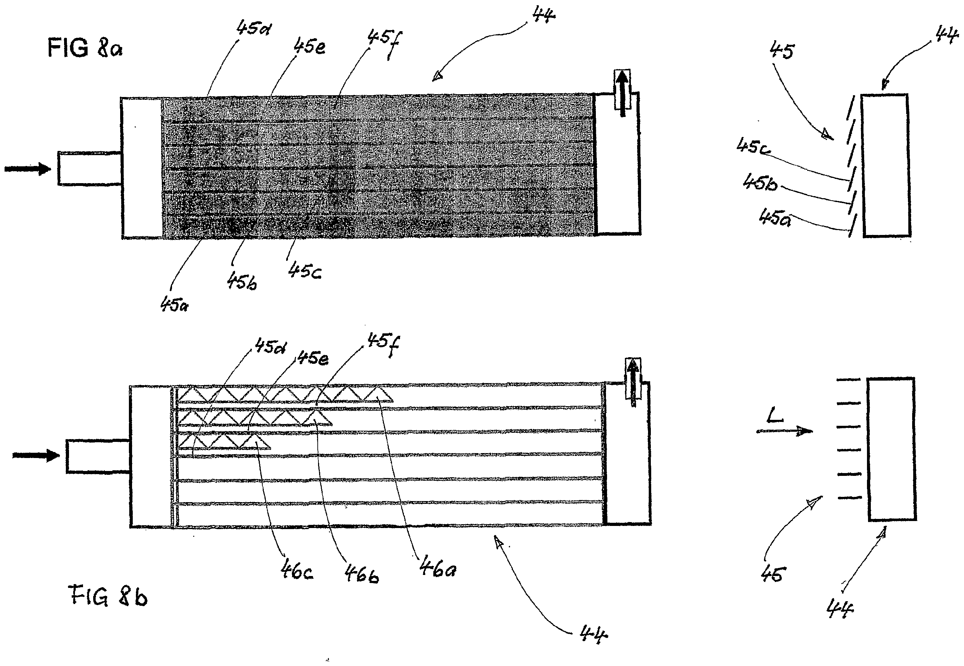

Fig. 8a und 8b zeigen einen Abgaswärmeübertrager 44 mit einer frontseitig angeordneten Jalousie 45, welche aus einzelnen schwenkbaren Klappen oder Lamellen 45a, 45b, 45c, ...45f besteht. Fig. 8a zeigt den Abgaswärmeübertrager 44 mit geschlossener Jalousie 45, d. h. die gesamte luftseitig beaufschlagte Stirnfläche des Abgaswärmeübertragers 44 ist durch die Lamellen 45a bis 45 f abgedeckt. Fig. 8b zeigt den Abgaswärmeübertrager 44 mit der Jalousie 45 in geöffneter Position, d. h. die Lamellen 45a bis 45f sind parallel zur Luftströmungsrichtung L ausgerichtet und lassen somit Kühlluft durch. Die Lamellen 45a bis 45f sind dabei jeweils in Luftströmungsrichtung vor den nicht sichtbaren bzw. nicht dargestellten Abgaskanälen des Abgaswärmeübertragers 44 angeordnet, so dass die Rippen 46a, 46b, 46c, ... zwischen den Abgaskanälen für eine Luftdurchströmung freigegeben sind. In der Jalousieposition gemäß Fig. 8b findet somit eine Kühlung des den Abgaswärmeübertrager 44 durchströmenden Abgases statt, während in der geschlossenen Jalousieposition gemäß Fig. 8 keine Kühlung durch einen Luftstrom stattfindet. Die Jalousie 45 wird insbesondere bei niedrigen Außentemperaturen, wenn die Gefahr des Einfrierens von Kondensat in den Abgaskanälen besteht, geschlossen. Damit kann ein Einfrieren weitestgehend verhindert und eine Abgasrückführung aufrechterhalten werden.

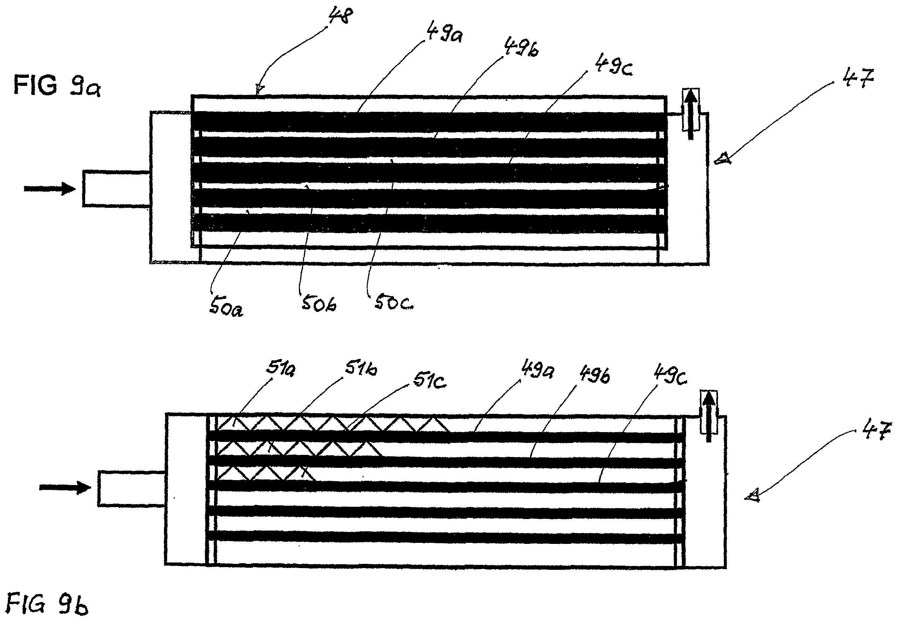

**Fig. 9a** und **9b** zeigen eine weitere Ausführungsform für einen vom Kühlluftstrom abschirmbaren Abgaskühler 47. In Luftströmungsrichtung vor dem Abgaskühler 47 ist eine verschiebbare Abdeckvorrichtung 48 angeordnet, welche aus Stegen 49a, 49b, 49c, ... sowie aus zwischen den Stegen angeordneten Längsschlitzen 50a, 50b, 50c, ... besteht. Die Stege 49a, 49b, 49c, ... können durch einen geeigneten Stellmotor quer zur Längsrichtung der nicht dargestellten Abgaskanäle bewegt werden und somit die Stirnfläche des Abgaskühlers 47 teilweise freigeben oder verschließen. Fig. 9a zeigt den Abgaskühler 47 mit einer geschlossenen Abdeckvorrichtung 48, d. h. die Stege 49a, 49b, 49c, ... decken die hier nicht sichtbaren Kühlluftkanäle ab, während sich die Schlitze 50a, 50b, 50c, ... in Luftströmungsrichtung vor den Abgaskanälen befinden. Somit findet eine Luftkühlung bei geschlossener Abdeckvorrichtung 48 nicht statt. Fig. 9b zeigt den Abgaskühler 47 mit geöffneter Abdeckvorrichtung 48, wobei die mit Rippen 51a, 51b, 51c, ... besetzten Kühlluftkanäle zwischen den Abgaskanälen freigegeben sind. Vor den Abgaskanälen befinden sich die Stege 49a, 49b, 49c, .... Die Abdeckvorrichtung 48 kann als Gitterstruktur (Gitterjalousie) ausgebildet sein, wobei die einzelnen Gitterstäbe faltbar oder gegeneinander verschiebbar sind, so dass ihre vom Luftstrom beaufschlagte Stirnfläche vergrößert oder verkleinert werden kann. Auch diese Abdeckvorrichtung 48 ist dafür geeignet, um ein Einfrieren von Kondensat in den Abgaskanälen zu verhindern und eine Abgasrückführung aufrechtzuerhalten. Die Ansteuerung der Abdeckvorrichtung 48, d. h. ihre Querbewegung kann durch geeignete Stellmotoren, z. B. temperaturabhängige Dehnstoffelemente, Unterdruckdosen oder sonstige Motoren erfolgen.

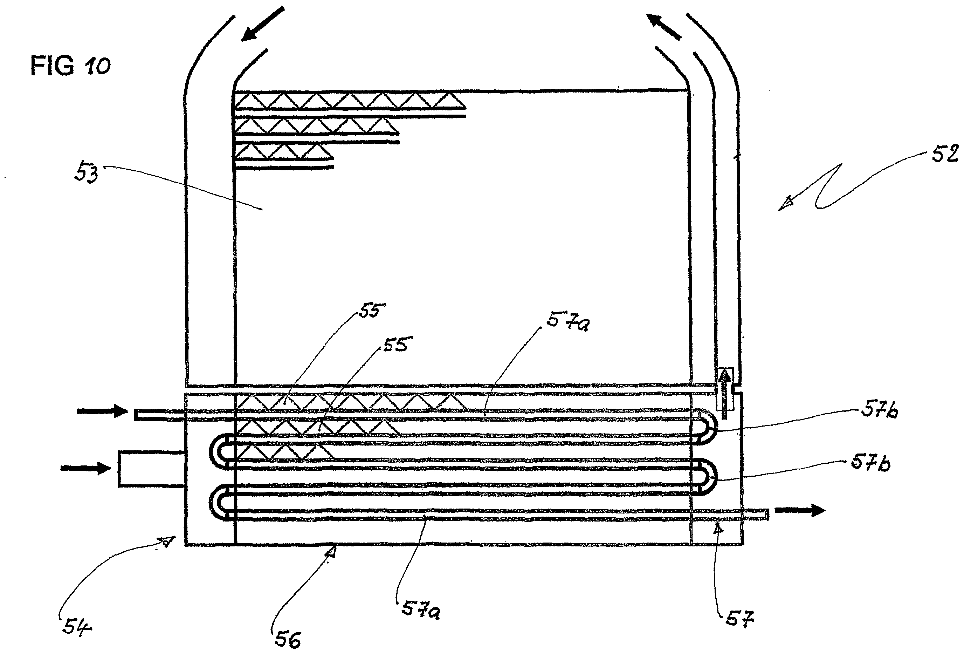

**Fig. 10** zeigt ein weiteres Ausführungsbeispiel mit einem so genannten Kombikühler 52, welcher aus einem Ladeluftkühler 53 und einem Abgaskühler 54 aufgebaut ist, die beide von Kühlluft beaufschlagt werden. Der Abgaskühler 54 weist einen aus Luftrippen 55 und nicht sichtbaren Abgaskanälen bestehenden Block 56 auf, vor dem - in Luftströmungsrichtung gesehen - ein serpentinenförmig ausgebildeter Kühlmittelkanal 57 angeordnet ist, welcher an einen nicht dargestellten Kühlmittelkreislauf der Brennkraftmaschine des Kraftfahrzeuges anschließbar ist. Der Kühlmittelkanal 57 weist gerade Abschnitte 57a auf, welche endseitig durch Rohrbögen 57b verbunden sind. Der Kühlmittelkanal 57, 57a, 57b bildet somit eine Rohrschlange, wobei die geraden Abschnitte 57a vor den nicht sichtbaren Abgaskanälen des Abgaskühlers 54 angeordnet sind, d. h. die Luftrippen 55, welche Kühlluftkanäle bilden, sind der Kühlluftströmung vollständig ausgesetzt. Die geraden Abschnitte 57a der Rohrschlange 57 stehen in wärmeübertragender Verbindung - sei es durch Wärmeleitung oder durch Wärmestrahlung - mit den Abgaskanälen und verhindern somit bei niedrigen Außentemperaturen ein Einfrieren von Kondensat in den Abgaskanälen und damit eine Verstopfung. Eine Abgasrückführung kann somit auch bei niedrigen Außentemperaturen infolge der von Kühlmittel höherer Temperatur durchströmten Rohrschlange 57 aufrechterhalten werden. Vorzugsweise wird das Kühlmittel dem Motorrücklauf, d. h. dem Kühlervorlauf des Kühlkreislaufes entnommen. Die Entnahme des heißen Kühlmittels für die Durchströmung der Rohrschlange 57 kann über ein nicht dargestelltes Ventil gesteuert werden. Die Rohrschlange 57 deckt vorzugsweise sämtliche Abgaskanäle ab, mindestens jedoch einen Teil der Abgaskanäle.

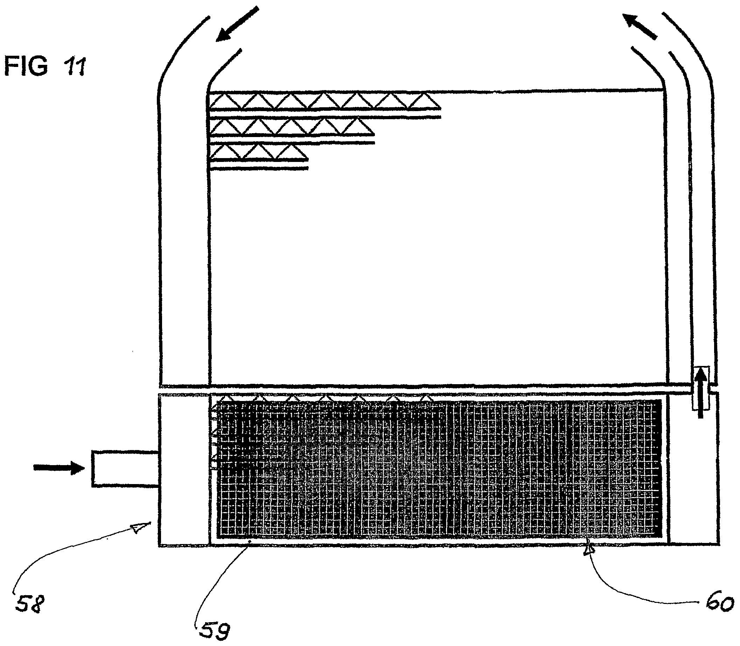

**Fig. 11** zeigt ein weiteres Ausführungsbeispiel mit einem luftgekühlten Abgaskühler 58, welcher eine von Kühlluft beaufschlagte Stirnfläche 59 aufweist. In Luftströmungsrichtung vor der Stirnfläche 59 des Abgaskühlers 58 ist ein elektrisch beheizbares Heizgitter 60, bestehend aus einer Vielzahl von Heizdrähten, welche mit den nicht sichtbaren Abgaskanälen und zwischen diesen angeordneten Luftrippen in wärmeübertragender Verbindung stehen, angeordnet. Das elektrisch beheizbare Heizgitter 60 gibt seine Wärme - auch durch den das Heizgitter 60 durchströmenden Luftstrom - an die Abgaskanäle und die Luftrippen ab, so dass diese bei niedrigen Außentemperaturen erwärmt werden. Damit kann ein Einfrieren von Kondensat im Abgaskühler 58 verhindert werden. Die Einschaltung der Beheizung kann manuell oder automatisch erfolgen, z. B. in Abhängigkeit von der Umgebungstemperatur oder der Abgasaustrittstemperatur hinter dem Abgaskühler 58.

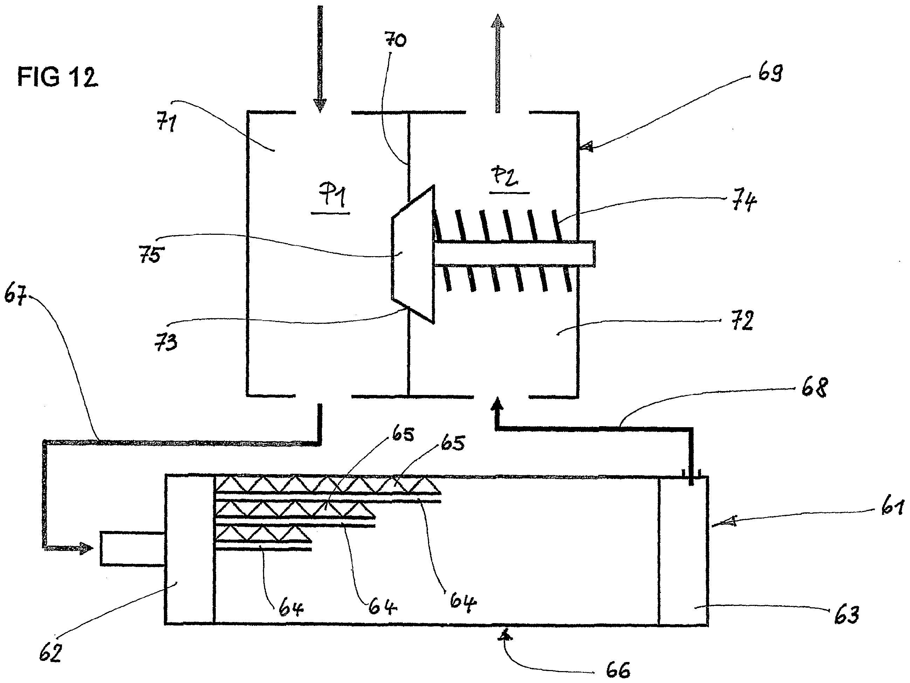

**Fig. 12** zeigt ein weiteres Ausführungsbeispiel mit einem luftgekühlten Abgaskühler 61, welcher einen abgasseitigen Eintrittskasten 62 und einen abgasseitigen Austrittskasten 63 aufweist, zwischen denen ein aus Abgaskanälen 64 und Kühlrippen 65 bestehender Abgasblock 66 angeordnet ist. Der Eintrittskasten 62 ist mit einer Abgaszuführleitung 67 und der Austrittskasten 63 mit einer Abgasrückführleitung 68 verbunden. Dem Abgaskühler 61 ist ein Ventil 69 zugeordnet, welches zwei durch eine Trennwand 70 abgeteilte Ventilkammern 71, 72 aufweist. In der Trennwand 70 ist eine Ventilöffnung 73 angeordnet, welche über ein durch eine Ventilschließfeder 74 belastetes Ventilschließglied 75 kontrolliert wird. Die Ventilkammer 71 wird von der Abgaszuführleitung 67 durchströmt, während die Ventilkammer 72 von der Abgasrückführleitung 68 durchströmt wird. Die Ventilöffnung 73 ist durch das Ventilschließglied 75 so lange geschlossen, wie die Kraft der Ventilschließfeder 74 größer als die auf das Ventilschließglied 75 wirkenden Druckkräfte ist. In der Ventilkammer 71 herrscht ein Druck P1, welcher dem eingangsseitigen Abgasdruck des Abgaskühlers 61 entspricht, während der Druck P2 in der Ventilkammer 72 dem ausgangsseitigen Abgasdruck des Abgaskühlers 61 entspricht. Somit wirkt auf das tellerförmige Ventilschließglied 75 ein Differenzdruck $\Delta P$, welcher dem abgasseitigen Druckabfall (P1 minus P2) im Abgaskühler 61 entspricht. So lange die Abgasrohre 64 frei sind, weist der Abgaswärmeübertrager 61 einen relativ geringen Druckabfall $\Delta P = P1 - P2$ auf. Tritt jedoch bei niedrigen Außentemperaturen eine teilweise oder vollständige Verstopfung der Abgasrohre 64 infolge Einfrierens von Kondensat auf, so steigt der abgasseitige Druckabfall im Abgaskühler 61 und damit der auf das Ventilschließglied 75 wirkende Differenzdruck: P2 wird kleiner, und P1 wird größer, bis die aus dem Differenzdruck resultierende Kraft größer als die Kraft der Schließfeder 74 wird - dann öffnet das Ventilschließglied 75 und gibt die Ventilöffnung 73 frei, die dann als Bypass zwischen der Abgaszuführleitung 67 und der Abgasrückführleitung 68 wirkt. Der Abgaskühler 61 wird dann ganz oder teilweise durch den geöffneten Bypass 73 umgangen. Damit wird sichergestellt, dass auch bei niedrigen Umgebungstemperaturen, bei welchen das eingefrorene Kondensat im Abgaskühler 61 die Rohre 64 verblockt, Abgas zurückgeführt werden kann. Ferner ist auch eine externe Ansteuerung des Ventils 69 - elektrisch oder pneumatisch - in Abhängigkeit von Druck oder Temperatur möglich. Die nicht in der Zeichnungen dargestellte Erfindung betrifft einen luftgekühlten Abgaswärmeübertrager mit einem Bypasskanal für das Abgas, etwa entsprechend dem Ausführungsbeispiel gemäß Fig. 3, jedoch ohne Abgasbypassklappe. Damit ist sichergestellt, dass auch bei niedrigen Außentemperaturen und wenn Kondensat im Kühler eingefroren ist und der Abgaskühler abgasseitig teilweise oder ganz verschlossen ("geblockt") ist, Abgas rückgeführt werden kann. Der Bypasskanal, insbesondere sein Eintritt ist dabei so gestaltet, dass der Druckverlust über den Bypasskanal zunächst größer ist als der abgasseitige Druckverlust im Abgaskühler (im nicht eingefrorenen Zustand, also mit maximalem abgasseitigen Durchtrittsquerschnitt). In diesem Zustand gilt die Beziehung:

$$\Delta P_{By} > \Delta P_{Ak},$$

wobei $P_{By}$ der Druckabfall im Bypass und $P_{Ak}$ der Druckabfall im Abgaskühler sind. Wenn Kondensat im Abgaskühler einfriert, steigt der Druckabfall im Abgaskühler an, bis er den Druckverlust im Bypasskanal erreicht und übersteigt. Dann strömt zunächst ein Teilmassenstrom und bei vollständiger Verstopfung des Abgaskühlers der gesamte Abgasmassenstrom durch den Bypass. Die Geometrie und die Abmessungen des Bypasskanals sind so ausgestaltet, dass das Kondensat nicht im Bypasskanal einfrieren kann; vorzugsweise wird der Bypasskanal als Rundrohr oder Rechteckrohr mit ausreichendem Querschnitt in Abhängigkeit der Massenströme ausgebildet. Bei diesem durch den Druckverlust selbst gesteuerten Bypass sind keine Bypassklappe und auch keine weitere Ansteuerung dieser Klappe erforderlich.

## Patentansprüche

1. Luftgekühlter Abgaswärmeübertrager, insbesondere Abgaskühler für Kraftfahrzeuge, mit von Abgas einer Brennkraftmaschine durchströmbaren Abgaskanälen, zwischen denen Rippen zur Luftkühlung angeordnet sind, wobei die Abgaskanäle als Rohre, insbesondere als Flachrohre (3), ausgebildet sind, mit den Rippen (4) einen Rippenrohrblock (2) bilden und die Rohre (3) Rohrenden (3a) aufweisen, die in Sammelkästen (5) für das Abgas aufgenommen sind und wobei dem Abgaswärmeübertrager (16) ein Bypasskanal (17) für das Abgas zugeordnet ist, wobei der Abgaswärmeübertrager (16) einen Druckabfall $\Delta P_{Ak}$ und der Bypasskanal (17) einen Druckabfall $\Delta P_{By}$ aufweisen, **dadurch gekennzeichnet, dass** bei über dem Gefrierpunkt liegenden Außentemperaturen und offenem Abgaswärmeübertrager (16) die Beziehung $\Delta P_{By} > \Delta P_{Ak}$ und bei niedrigen Außentemperaturen durch Einfrieren der Abgaskanälen teilweise oder ganz verstopftem Abgaswärmeübertrager (16) die Beziehung $\Delta P_{By} < \Delta P_{Ak}$ gilt und der Bypasskanal (17) ohne Bypassklappe ausgebildet ist.

2. Abgaswärmeübertrager nach Anspruch 1, **dadurch gekennzeichnet, dass** die Sammelkästen (5) Rohrböden (6) mit Öffnungen (11) aufweisen, in welche die Rohrenden (3a) eingeschweißt oder eingelötet sind.

3. Abgaswärmeübertrager nach Anspruch 1 oder 2, **dadurch gekennzeichnet, dass** die Rohre (3) aus Stahl, insbesondere Edelstahl herstellbar sind.

4. Abgaswärmeübertrager nach Anspruch 2 oder 3, **dadurch gekennzeichnet, dass** die Rippen (4) aus Stahl, insbesondere Edelstahl oder aus einem Buntmetall, insbesondere Kupfer herstellbar sind.

5. Abgaswärmeübertrager nach mindestens einem der Ansprüche 1 bis 4, **dadurch gekennzeichnet, dass** die Rippen als Wellrippen (4) ausgebildet sind und Kiemen aufweisen.

6. Abgaswärmeübertrager nach mindestens einem der Ansprüche 1 bis 4, **dadurch gekennzeichnet, dass** die Rippen als Stegrippen ausgebildet sind.

7. Abgaswärmeübertrager nach mindestens einem der Ansprüche 1 bis 6, **dadurch gekennzeichnet, dass** die Rohre (3) Turbulenzeinlagen, eingelötete Innenrippen oder so genannte winglets aufweisen.

8. Abgaswärmeübertrager nach mindestens einem der Ansprüche 1 bis 7, **dadurch gekennzeichnet, dass** die Rohre (3), in Luftströmungsrichtung gesehen, mehrreihig angeordnet sind.

9. Abgaswärmeübertrager nach mindestens einem der Ansprüche 1 bis 8, **dadurch gekennzeichnet, dass** der Rippenrohrblock (2) Seitenteile (12, 13) aufweist.

10. Abgaswärmeübertrager nach mindestens einem der Ansprüche 1 bis 9, **dadurch gekennzeichnet, dass** die Sammelkästen (5) für das Abgas aus Edelstahl oder aus Kunststoff herstellbar sind.

11. Abgaswärmeübertrager nach Anspruch 9, **dadurch gekennzeichnet, dass** die Seitenteile (12, 13) als nicht durchströmbare Flachrohre ausgebildet sind, die mit den äußersten Rippenlagen stoffschlüssig verbunden, insbesondere verlötet sind.

12. Abgaswärmeübertrager nach mindestens einem der Ansprüche 1 bis 11, **dadurch gekennzeichnet, dass** die Rippen auf der Luftseite, insbesondere Wellrippen (4) oder Innenrippen auf der Abgasseite eine Rippenhöhe h aufweisen, wobei folgender Bemessungsbereich gilt:
$2 \leq h \leq 10$ mm, vorzugsweise $4 \leq h \leq 6$ mm.

13. Abgaswärmeübertrager nach Anspruch 12, **dadurch gekennzeichnet, dass** die Rippenhöhe h = 5 mm beträgt.

14. Abgaswärmeübertrager nach mindestens einem der Ansprüche 1 bis 13, **dadurch gekennzeichnet, dass** die Flachrohre (3) eine Rohrhöhe b aufweisen, wobei folgender Bemessungsbereich gilt:
$2 \leq b \leq 15$ mm, insbesondere $3 \leq b \leq 10$ mm.

15. Abgaswärmeübertrager nach Anspruch 14, **dadurch gekennzeichnet, dass** die Rohrhöhe b = 4,5 mm beträgt.

16. Abgaswärmeübertrager nach Anspruch 12 oder 13 und Anspruch 14 oder 15, **dadurch gekennzeichnet, dass** das Verhältnis von Rohrhöhe b zu Rippenhöhe h im Bereich $0,5 \leq b/h \leq 1,5$ liegt.

17. Abgaswärmeübertrager nach mindestens einem der Ansprüche 1 bis 16, **dadurch gekennzeichnet, dass** die Rippen (4) zwischen den Rohren (3) eine Rippendichte im Bereich von 20 bis 80 Rippen/dm, vorzugsweise im Bereich von 30 bis 50 Rippen/dm aufweisen.

18. Abgaswärmeübertrager nach mindestens einem der Ansprüche 1 bis 17, **dadurch gekennzeichnet, dass** die Rohre (3) einen hydraulischen Durchmesser $d_h$ aufweisen, der im Bereich von $2 \leq d_h \leq 20$, vorzugsweise im Bereich von $3 \leq d_h \leq 10$ mm liegt.

19. Abgaswärmeübertrager nach mindestens einem der Ansprüche 1 bis 18, **dadurch gekennzeichnet, dass** der Rippenrohrblock (2) eine Tiefe T, gemessen in Luftströmungsrichtung, im Bereich von $20 \leq T \leq 100$ mm, vorzugsweise im Bereich von $30 \leq T \leq 70$ mm aufweist.

20. Abgaswärmeübertrager nach mindestens einem der Ansprüche 1 bis 19, **dadurch gekennzeichnet, dass** der Rippenrohrblock (2) eine Höhe H und eine Länge L aufweist und dass das Verhältnis von Höhe H zu Länge L im Bereich von $0,1 \leq H/L \leq 0,8$, vorzugsweise im Bereich von $0,2 \leq H/L \leq 0,4$ liegt.

21. Kühlmodul mit einem Abgaswärmeübertrager nach mindestens einem der Ansprüche 1 bis 20 und eine zusätzliche Komponente bestehend aus einem Kühlmittelkühler, einem Kondensator und/oder einem Ladeluftkühler.

22. Kühlmodul nach Anspruch 21, **dadurch gekennzeichnet, dass** der Abgaswärmeübertrager und der Ladeluftkühler übereinander im Kühlmodul angeordnet sind.

23. Wärmeübertragermodul (50) mit einem Abgaswärmeübertrager nach mindestens einem der Ansprüche 1 bis 20, **dadurch gekennzeichnet, dass** der Abgaswärmeübertrager und ein Ladeluftkühler (52) miteinander verbunden sind.

24. Wärmeübertragermodul nach Anspruch 23, **dadurch gekennzeichnet, dass** das Abgas austrittsseitig von der Ladeluft getrennt und durch den oder um den austrittsseitigen Luftkasten (57, 61, 65) der Ladelufkühler geführt ist.

25. Wärmeübertragermodul nach Anspruch 24, **da-**

**durch gekennzeichnet, dass** das Abgas, stromaufwärts vom eintrittsseitigen Sammelkasten und/oder stromabwärts vom austrittsseitigen Sammelkasten (55, 64), in einem separaten Kanal (59, 62, 66) geführt ist.

26. Wärmeübertragermodul nach Anspruch 25, **dadurch gekennzeichnet, dass** der separate Kanal (59, 62, 66) innerhalb oder außerhalb des austrittsseitigen Ladeluftkastens (57, 61, 65) angeordnet ist.

27. Wärmeübertragermodul nach Anspruch 26, **dadurch gekennzeichnet, dass** der separate Kanal (59) durch eine Trennwand (58) im Ladeluftkasten (57) gebildet wird.

28. Wärmeübertragermodul nach Anspruch 25 oder 26, **dadurch gekennzeichnet, dass** der separate Kanal (62, 66) für das Abgas als Rohr oder Schlauch aus Kunststoff, Gummi oder Stahl oder als Kunststoff-Blasteil herstellbar ist.

29. Wärmeübertragermodul nach mindestens einem der Ansprüche 24 bis 28, **dadurch gekennzeichnet, dass** das Abgas und die Ladeluft stromabwärts des Ladeluftkastens (57, 61, 65) in einer Mischzone mischbar sind.

30. Wärmeübertragermodul nach Anspruch 29, **dadurch gekennzeichnet, dass** die Mischzone geodätisch tiefer als der Austritt der Ladeluft aus dem Ladeluftkasten (57, 61, 65) angeordnet ist.

31. Wärmeübertragermodul nach mindestens einem der Ansprüche 23 bis 30, **dadurch gekennzeichnet, dass** das Abgas von der Ladeluft mittels einer nach dem bekannten Venturieffekt arbeitenden Einrichtung, insbesondere mittels einer Venturidüse ansaugbar ist.

32. Abgaswärmeübertrager nach mindestens einem der Ansprüche 1 bis 20, **dadurch gekennzeichnet, dass** der Abgaswärmeübertrager abgasaustrittsseitig einen Kondensatablass aufweist.

33. Anordnung zur Abgasrückführung (AGR) in einem Kraftfahrzeug mit einer Brennkraftmaschine (23) mit einer Ansaugleitung (29) und einer Abgasleitung (24) sowie einer einen Abgaskühler aufweisenden AGR-Leitung (31), **dadurch gekennzeichnet, dass** der Abgaskühler als Abgaswärmeübertrager nach einem der Ansprüche 1 bis 20 ausgebildet ist.

34. Anordnung nach Anspruch 33, **dadurch gekennzeichnet, dass** dem Abgaswärmeübertrager in der AGR-Leitung (31) ein Abgaskühler (32) vorgeschaltet ist, welcher von einem flüssigen Kühlmittel, insbesondere dem Kühlmittel des Kühlkreislaufes der Brennkraftmaschine (23) kühlbar ist.

35. Anordnung nach Anspruch 33 oder 34, **dadurch gekennzeichnet, dass** der Abgaswärmeübertrager an beliebiger Stelle im Motorraum, jedoch nicht am Kühlmodul angeordnet ist.

36. Anordnung nach Anspruch 33, 34 oder 35, **dadurch gekennzeichnet, dass** dem Abgaswärmeübertrager ein eigener Lüfter zur Förderung von Kühlluft vor- oder nachgeschaltet ist.

37. Abgaswärmeübertrager nach mindestens einem der Ansprüche 1 bis 20 oder Anordnung nach mindestens einem der Ansprüche 33 bis 36, **dadurch gekennzeichnet, dass** der Abgaswärmeübertrager ein integriertes AGR-Ventil aufweist.

38. Abgaswärmeübertrager nach mindestens einem der Ansprüche 1 bis 20, **dadurch gekennzeichnet, dass** dem Abgaswärmeübertrager ein Oxidationskatalysator vorgeschaltet ist.

39. Abgaswärmeübertrager nach Anspruch 38, **dadurch gekennzeichnet, dass** der Oxidationskatalysator innerhalb oder außerhalb des eintrittsseitigen Sammelkastens für das Abgas angeordnet ist.

**Claims**

1. An air-cooled exhaust gas heat exchanger, in particular an exhaust gas cooler for motor vehicles, having exhaust gas ducts which can be traversed by exhaust gas of an internal combustion engine and between which fins for air cooling are arranged, wherein the exhaust gas ducts are embodied as tubes, in particular flat tubes (3), form a fin/tube block (2) together with the fins (4), and the tubes (3) have tube ends (3a) which are received in collecting tanks (5) for the exhaust gas, and wherein the exhaust gas heat exchanger (16) is assigned a bypass duct (17) for the exhaust gas, wherein the exhaust gas heat exchanger (16) has a pressure drop $\Delta P_{Ak}$ and the bypass duct (17) has a pressure drop $\Delta P_{By}$, **characterised in that** when the outer temperatures are above the freezing point and the exhaust gas heat exchanger (16) is open, the relationship $\Delta P_{By} > \Delta P_{Ak}$ applies, and in the case of low outer temperatures the exhaust gas heat exchanger (16) is partially or completely blocked because of freezing exhaust gas ducts, the relationship $\Delta P_{By} < \Delta P_{Ak}$ applies and the bypass duct is embodied without a bypass flap.

2. The exhaust gas heat exchanger as claimed in claim 1, **characterised in that** the collecting tanks (5) have tube plates (6) with openings (11) into which the tube ends (3a) are welded or soldered.

3. The exhaust gas heat exchanger as claimed in claim 1 or 2, **characterised in that** the tubes (3) can be produced from steel, in particular stainless steel.

4. The exhaust gas heat exchanger as claimed in claim 2 or 3, **characterised in that** the fins (4) can be produced from steel, in particular stainless steel or from a non-ferrous metal, in particular copper.

5. The exhaust gas heat exchanger as claimed in at least one of claims 1 to 4, **characterised in that** the fins are embodied as corrugated fins (4) and have gills.

6. The exhaust gas heat exchanger as claimed in at least one of claims 1 to 4, **characterised in that** the fins are embodied as webbed fins.

7. The exhaust gas heat exchanger as claimed in at least one of claims 1 to 6, **characterised in that** the tubes (3) have turbulence inserts, soldered-in internal fins or so-called winglets.

8. The exhaust gas heat exchanger as claimed in at least one of claims 1 to 7, **characterised in that** the tubes (3) are arranged in a plurality of rows as viewed in the air flow direction.

9. The exhaust gas heat exchanger as claimed in at least one of claims 1 to 8, **characterised in that** the fin/tube block (2) has side parts (12, 13).

10. The exhaust gas heat exchanger as claimed in at least one of claims 1 to 9, **characterised in that** the collecting tanks (5) for the exhaust gas can be produced from stainless steel or from plastic.

11. The exhaust gas heat exchanger as claimed in claim 9, **characterised in that** the side parts (12, 13) are embodied as flat tubes which cannot be traversed by flow and are materially connected, in particular soldered, to the outermost fin layers.

12. The exhaust gas heat exchanger as claimed in at least one of claims 1 to 11, **characterised in that** the fins on the air side, in particular corrugated fins (4) or internal fins on the exhaust gas side, have a fin height h, wherein the following dimensional range applies:
$2 \leq h \leq 10$ mm, preferably $4 \leq h \leq 6$ mm.

13. The exhaust gas heat exchanger as claimed in claim 12, **characterised in that** the fin height h = 5 mm.

14. The exhaust gas heat exchanger as claimed in at least one of claims 1 to 13, **characterised in that** the flat tubes (3) have a tube height b, wherein the following dimensional range applies:

$2 \leq b \leq 15$ mm, in particular $3 \leq b \leq 10$ mm.

15. The exhaust gas heat exchanger as claimed in claim 14, **characterised in that** the tube height b = 4.5 mm.

16. The exhaust gas heat exchanger as claimed in claim 12 or 13 and claim 14 or 15, **characterised in that** the ratio of tube height b to fin height h is in the range $0.5 \leq b/h \leq 1.5$.

17. The exhaust gas heat exchanger as claimed in at least one of claims 1 to 16, **characterised in that** the fins (4) between the tubes (3) have a fin density in the range from 20 to 80 fins/dm, preferably in the range from 30 to 50 fins/dm.

18. The exhaust gas heat exchanger as claimed in at least one of claims 1 to 17, **characterised in that** the tubes (3) have a hydraulic diameter $d_h$ which is in the range of $2 \leq d_h \leq 20$, preferably in the range of $3 \leq d_h \leq 10$ mm.

19. The exhaust gas heat exchanger as claimed in at least one of claims 1 to 18, **characterised in that** the fin/tube block (2) has a depth T, measured in the air flow direction, in the range of $20 \leq T \leq 100$ mm, preferably in the range of $30 \leq T \leq 70$ mm.

20. The exhaust gas heat exchanger as claimed in at least one of claims 1 to 19, **characterised in that** the fin/tube block (2) has a height H and a length L and **in that** the ratio of height H to length L is in the range of $0.1 \leq H/L \leq 0.8$, preferably in the range of $0.2 \leq H/L \leq 0.4$.

21. A cooling module with an exhaust gas heat exchanger as claimed in at least one of claims 1 to 20 and an additional component composed of a coolant cooler, a condenser and/or a charge air cooler.

22. The cooling module as claimed in claim 21, **characterised in that** the exhaust gas heat exchanger and the charge air cooler are arranged one above the other in the cooling module.

23. A heat exchanger module (50) with an exhaust gas heat exchanger as claimed in at least one of claims 1 to 20, **characterised in that** the exhaust gas heat exchanger and a charge air cooler (52) are connected to one another.

24. The heat exchanger module as claimed in claim 23, **characterised in that**, at the outlet side, the exhaust gas is conducted separately from the charge air and through or around the outlet-side air tank (57, 61, 65) of the charge air coolers.

25. The heat exchanger module as claimed in claim 24, **characterised in that** the exhaust gas upstream of the inlet-side collecting tank and/or downstream of the outlet-side collecting tank (55, 64) is conducted in a separate duct (59, 62, 66).

26. The heat exchanger module as claimed in claim 25, **characterised in that** the separate duct (59, 62, 66) is arranged inside or outside the outlet-side charge air tank (57, 61, 65).

27. The heat exchanger module as claimed in claim 26, **characterised in that** the separate duct (59) is formed by a partition (58) in the charge air tank (57) .

28. The heat exchanger module as claimed in claim 25 or 26, **characterised in that** the separate duct (62, 66) for the exhaust gas can be produced as a tube or hose made from plastic, rubber or steel, or as a plastic blow-moulded part.

29. The heat exchanger module as claimed in at least one of claims 24 to 28, **characterised in that** the exhaust gas and the charge air can be mixed in a mixing zone downstream of the charge air tank (57, 61, 65).

30. The heat exchanger module as claimed in claim 29, **characterised in that** the mixing zone is arranged geodetically lower than the outlet of the charge air out of the charge air tank (57, 61, 65).

31. The heat exchanger module as claimed in at least one of claims 23 to 30, **characterised in that** the exhaust gas can be sucked in by the charge air by means of a device which operates according to the known venturi effect, in particular by means of a venturi nozzle.

32. The exhaust gas heat exchanger as claimed in at least one of claims 1 to 20, **characterised in that** the exhaust gas heat exchanger has, at the exhaust gas outlet side, a condensate discharge.

33. An arrangement for exhaust gas recirculation (EGR) in a motor vehicle having an internal combustion engine (23) with an intake line (29) and an exhaust gas line (24) and also an EGR line (31) which has an exhaust gas cooler, **characterised in that** the exhaust gas cooler is embodied as an exhaust gas heat exchanger as claimed in one of claims 1 to 20.

34. The arrangement as claimed in claim 33, **characterised in that** an exhaust gas cooler (32) is connected upstream of the exhaust gas heat exchanger in the EGR line (31), which exhaust gas cooler can be cooled by a liquid coolant, in particular the coolant of the coolant circuit of the internal combustion engine (23) .

35. The arrangement as claimed in claim 33 or 34, **characterised in that** the exhaust gas heat exchanger is arranged at any desired point in the engine bay, but not on the cooling module.

36. The arrangement as claimed in claim 33, 34 or 35, **characterised in that** a separate fan for feeding cooling air is connected upstream or downstream of the exhaust gas heat exchanger.

37. The exhaust gas heat exchanger as claimed in at least one of claims 1 to 20 or the arrangement as claimed in at least one of claims 33 to 36, **characterised in that** the exhaust gas heat exchanger has an integrated EGR valve.

38. The exhaust gas heat exchanger as claimed in at least one of claims 1 to 20, **characterised in that** an oxidation catalytic converter is connected upstream of the exhaust gas heat exchanger.

39. The exhaust gas heat exchanger as claimed in claim 38, **characterised in that** the oxidation catalytic converter is arranged inside or outside the inlet-side collecting tank for the exhaust gas.

**Revendications**

1. Echangeur de chaleur de gaz d'échappement, refroidi par de l'air, en particulier refroidisseur de gaz d'échappement pour des véhicules automobiles, comprenant des conduits de gaz d'échappement pouvant être traversés par des gaz d'échappement d'un moteur à combustion interne, conduits de gaz d'échappement entre lesquels sont disposées des ailettes servant au refroidissement de l'air, où les conduits de gaz d'échappement sont conçus comme des tubes, en particulier comme des tubes plats (3) avec lesquels des ailettes (4) forment un bloc de tubes et d'ailettes (2), et les tubes (3) présentent des extrémités tubulaires (3a) qui sont logées dans des bacs collecteurs (5) prévus pour les gaz d'échappement, et où un conduit de dérivation (17) prévu pour les gaz d'échappement est associé à l'échangeur de chaleur de gaz d'échappement (16), où l'échangeur de chaleur de gaz d'échappement (16) présente une chute de pression $\Delta P_{Ak}$ et le conduit de dérivation (17) présente une chute de pression $\Delta P_{By}$, **caractérisé en ce que** la relation $\Delta P_{By} > \Delta P_{Ak}$ s'applique dans le cas de températures extérieures se situant au-dessus du point de congélation et quand l'échangeur de chaleur de gaz d'échappement (16) est ouvert, et la relation $\Delta P_{By} < \Delta P_{Ak}$ s'applique dans le cas de températures extérieures basses dues au gel des conduits de gaz d'échappement et quand l'échangeur de chaleur de gaz d'échappement (16) est partiellement ou totalement obstrué, et **en ce que** le conduit de dérivation (17) est conçu sans volet de dérivation.

2. Echangeur de chaleur de gaz d'échappement selon la revendication 1, **caractérisé en ce que** les bacs colleteurs (5) présentent des plateaux à tubes (6) comportant des ouvertures (11) dans lesquelles sont soudées ou brasées les extrémités tubulaires (3a).

3. Echangeur de chaleur de gaz d'échappement selon la revendication 1 ou 2, **caractérisé en ce que** les tubes (3) peuvent être fabriqués en acier, en particulier en acier spécial.

4. Echangeur de chaleur de gaz d'échappement selon la revendication 2 ou 3, **caractérisé en ce que** les ailettes (4) peuvent être fabriquées en acier, en particulier en acier spécial, ou bien dans un métal non ferreux, en particulier tel que du cuivre.

5. Echangeur de chaleur de gaz d'échappement selon au moins l'une quelconque des revendications 1 à 4, **caractérisé en ce que** les ailettes sont configurées comme des ailettes ondulées (4) et présentent des ouïes.

6. Echangeur de chaleur de gaz d'échappement selon au moins l'une quelconque des revendications 1 à 4, **caractérisé en ce que** les ailettes sont configurées comme des ailettes à nervures.

7. Echangeur de chaleur de gaz d'échappement selon au moins l'une quelconque des revendications 1 à 6, **caractérisé en ce que** les tubes (3) présentent des éléments rapportés produisant des turbulences, présentent des ailettes intérieures brasées ou des éléments que l'on appelle des winglets.

8. Echangeur de chaleur de gaz d'échappement selon au moins l'une quelconque des revendications 1 à 7, **caractérisé en ce que** les tubes (3), vus dans la direction d'écoulement de l'air, sont disposés sur plusieurs rangées.

9. Echangeur de chaleur de gaz d'échappement selon au moins l'une quelconque des revendications 1 à 8, **caractérisé en ce que** le bloc de tubes et d'ailettes (2) présente des parties latérales (12, 13).

10. Echangeur de chaleur de gaz d'échappement selon au moins l'une quelconque des revendications 1 à 9, **caractérisé en ce que** les bacs collecteurs (5) prévus pour les gaz d'échappement peuvent être fabriqués en acier spécial ou en matière plastique.

11. Echangeur de chaleur de gaz d'échappement selon la revendication 9, **caractérisé en ce que** les parties latérales (12, 13) sont conçues comme des tubes plats ne pouvant pas être traversés, lesquelles parties latérales sont assemblées par continuité de matière, en particulier brasées, avec les couches d'ailettes situées le plus à l'extérieur.

12. Echangeur de chaleur de gaz d'échappement selon au moins l'une quelconque des revendications 1 à 11, **caractérisé en ce que** les ailettes placées sur le côté air, en particulier des ailettes ondulées (4), ou bien des ailettes intérieures placées sur le côté gaz d'échappement, présentent une hauteur d'ailettes h, où s'applique une plage de dimensions qui suit :
$2 \leq h \leq 10$ mm, de préférence $4 \leq h \leq 6$ mm.

13. Echangeur de chaleur de gaz d'échappement selon la revendication 12, **caractérisé en ce que** la hauteur d'ailettes h est égale à 5 mm.

14. Echangeur de chaleur de gaz d'échappement selon au moins l'une quelconque des revendications 1 à 13, **caractérisé en ce que** les tubes plats (3) présentent une hauteur tubulaire b, où s'applique une plage de dimensions qui suit :
$2 \leq b \leq 15$ mm, en particulier $3 \leq b \leq 10$ mm.

15. Echangeur de chaleur de gaz d'échappement selon la revendication 14, **caractérisé en ce que** la hauteur tubulaire b est égale à 4,5 mm.

16. Echangeur de chaleur de gaz d'échappement selon la revendication 12 ou 13 et selon la revendication 14 ou 15, **caractérisé en ce que** le rapport de la hauteur tubulaire b, relativement à la hauteur d'ailettes h, se situe dans la plage de $0,5 \leq b/h \leq 1,5$.

17. Echangeur de chaleur de gaz d'échappement selon au moins l'une quelconque des revendications 1 à 16, **caractérisé en ce que** les ailettes (4) présentent, entre les tubes (3), une densité d'ailettes se situant dans la plage comprise entre 20 ailettes / dm et 80 ailettes / dm, de préférence dans la plage comprise entre 30 ailettes / dm et 50 ailettes / dm.

18. Echangeur de chaleur de gaz d'échappement selon au moins l'une quelconque des revendications 1 à 17, **caractérisé en ce que** les tubes (3) présentent un diamètre hydraulique $d_h$ qui se situe dans la plage de $2$ mm $\leq d_h \leq 20$ mm, de préférence dans la plage de $3$ mm $\leq d_h \leq 10$ mm.

19. Echangeur de chaleur de gaz d'échappement selon au moins l'une quelconque des revendications 1 à 18, **caractérisé en ce que** le bloc de tubes et d'ailettes (2) présente une profondeur T mesurée dans la direction d'écoulement de l'air et se situant dans la plage de $20$ mm $\leq T \leq 100$ mm, de préférence dans la plage de $30$ mm $\leq T \leq 70$ mm.

**20.** Echangeur de chaleur de gaz d'échappement selon au moins l'une quelconque des revendications 1 à 19, **caractérisé en ce que** le bloc de tubes et d'ailettes (2) présente une hauteur H et une longueur L, et **en ce que** le rapport de la hauteur H, relativement à la longueur L, se situe dans la plage de $0,1 \leq H/L \leq 0,8$, de préférence dans la plage de $0,2 \leq H/L \leq 0,4$.

**21.** Module de refroidissement comprenant un échangeur de chaleur de gaz d'échappement selon au moins l'une quelconque des revendications 1 à 20, et composant supplémentaire constitué d'un radiateur à liquide de refroidissement, d'un condenseur et / ou d'un refroidisseur d'air de suralimentation.

**22.** Module de refroidissement selon la revendication 21, **caractérisé en ce que** l'échangeur de chaleur de gaz d'échappement et le refroidisseur d'air de suralimentation sont disposés l'un au-dessus de l'autre dans le module de refroidissement.

**23.** Module d'échangeur de chaleur (50) comprenant un échangeur de chaleur de gaz d'échappement selon au moins l'une quelconque des revendications 1 à 20, **caractérisé en ce que** l'échangeur de chaleur de gaz d'échappement et un refroidisseur d'air de suralimentation (52) sont assemblés l'un à l'autre.

**24.** Module d'échangeur de chaleur selon la revendication 23, **caractérisé en ce que** les gaz d'échappement, côté sortie, sont séparés de l'air de suralimentation et sont guidés à travers ou autour de la boîte à air de suralimentation (57, 61, 65), située côté sortie, du refroidisseur d'air de suralimentation.

**25.** Module d'échangeur de chaleur selon la revendication 24, **caractérisé en ce que** les gaz d'échappement, en amont du bac collecteur situé côté entrée et / ou en aval du bac collecteur (55, 64) situé côté sortie, sont guidés dans un conduit séparé (59, 62, 66).

**26.** Module d'échangeur de chaleur selon la revendication 25, **caractérisé en ce que** le conduit séparé (59, 62, 66) est disposé à l'intérieur ou à l'extérieur de la boîte à air de suralimentation (57, 61, 65) située côté sortie.

**27.** Module d'échangeur de chaleur selon la revendication 26, **caractérisé en ce que** le conduit séparé (59) est formé, dans la boîte à air de suralimentation (57), par une paroi de séparation (58).

**28.** Module d'échangeur de chaleur selon la revendication 25 ou 26, **caractérisé en ce que** le conduit séparé (62, 66) prévu pour les gaz d'échappement peut être fabriqué comme un tube ou un flexible en matière plastique, en caoutchouc ou en acier, ou bien comme une pièce en matière plastique réalisée par soufflage.

**29.** Module d'échangeur de chaleur selon au moins l'une quelconque des revendications 24 à 28, **caractérisé en ce que** les gaz d'échappement et l'air de suralimentation peuvent être mélangés dans une zone de mélange située en aval de la boîte à air de suralimentation (57, 61, 65).

**30.** Module d'échangeur de chaleur selon la revendication 29, **caractérisé en ce que** la zone de mélange est disposée en étant géodésiquement plus basse que la sortie de l'air de suralimentation sortant de la boîte à air de suralimentation (57, 61, 65).

**31.** Module d'échangeur de chaleur selon au moins l'une quelconque des revendications 23 à 30, **caractérisé en ce que** les gaz d'échappement peuvent être aspirés par l'air de suralimentation, au moyen d'un dispositif fonctionnant selon l'effet Venturi connu, en particulier au moyen d'un tube de Venturi.

**32.** Echangeur de chaleur de gaz d'échappement selon au moins l'une quelconque des revendications 1 à 20, **caractérisé en ce que** l'échangeur de chaleur de gaz d'échappement présente une évacuation de condensat située côté sortie des gaz d'échappement.

**33.** Agencement servant au recyclage des gaz d'échappement (RGE) dans un véhicule automobile comprenant un moteur à combustion interne (23) comportant une conduite d'admission (29) et une conduite des gaz d'échappement (24), ainsi qu'une conduite RGE (31) présentant un refroidisseur de gaz d'échappement, **caractérisé en ce que** le refroidisseur de gaz d'échappement est conçu comme un échangeur de chaleur de gaz d'échappement selon l'une quelconque des revendications 1 à 20.

**34.** Agencement selon la revendication 33, **caractérisé en ce qu'**un refroidisseur de gaz d'échappement (32) placé dans la conduite RGE (31) est monté en amont de l'échangeur de chaleur de gaz d'échappement, lequel refroidisseur de gaz d'échappement peut être refroidi par un moyen de refroidissement liquide, en particulier par le liquide de refroidissement du circuit de refroidissement du moteur à combustion interne (23).

**35.** Agencement selon la revendication 33 ou 34, **caractérisé en ce que** l'échangeur de chaleur de gaz d'échappement est disposé à n'importe quel endroit dans le compartiment moteur, mais pas sur le module de refroidissement.

**36.** Agencement selon la revendication 33, 34 ou 35, **caractérisé en ce qu'**un propre ventilateur servant au transport d'air de refroidissement est monté en amont ou en aval de l'échangeur de chaleur de gaz d'échappement.

37. Echangeur de chaleur de gaz d'échappement selon au moins l'une quelconque des revendications 1 à 20, ou bien agencement selon au moins l'une quelconque des revendications 33 à 36, **caractérisé en ce que** l'échangeur de chaleur de gaz d'échappement présente une électrovanne RGE intégrée.

38. Echangeur de chaleur de gaz d'échappement selon au moins l'une quelconque des revendications 1 à 20, **caractérisé en ce qu'**un catalyseur d'oxydation est monté en amont de l'échangeur de chaleur de gaz d'échappement.

39. Echangeur de chaleur de gaz d'échappement selon la revendication 38, **caractérisé en ce que** le catalyseur d'oxydation est disposé à l'intérieur ou à l'extérieur du bac collecteur situé côté entrée et prévu pour les gaz d'échappement.

FIG. 1

EP 1 800 078 B1

FIG 2

FIG 3

EP 1 800 078 B1

FIG 4

EP 1 800 078 B1

EP 1 800 078 B1

FIG 5

19

FIG 6b

FIG 6a

FIG 7a

34

39a

38

35

39

39b

37

36

EP 1 800 078 B1

21

FIG. 7b

40

41

42

43

FIG 8a

FIG 8b

FIG 9a

FIG 9b

FIG 10

53

52

55

55

57a

57b

57b

54

56

57a

57

EP 1 800 078 B1

EP 1 800 078 B1

**FIG 11**

58

59

60

FIG 12

EP 1 800 078 B1

**EP 1 800 078 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19907163 A1
- DE 10203003 A1
- EP 0677715 A1
- EP 916837 B1
- DE 10327847 A1